# EUROPEAN PATENT APPLICATION

(11) **EP 4 391 597 A1**
(43) Date of publication of application: **26.06.2024**
(21) Application number: 22877831.2
(22) Date of filing: 01.09.2022
(51) Int. Cl.: H04W 4/029

(54) **POSITIONING METHOD, APPARATUS, AND SYSTEM**

(30) Priority: 08.10.2021 CN 202111173124
(71) Applicant: Huawei Technologies Co., Ltd., Shenzhen, Guangdong 518129 (CN)
(72) Inventor: LI, Yongcui, Shenzhen, Guangdong 518129 (CN); NI, Hui, Shenzhen, Guangdong 518129 (CN); ZHANG, Wanqiang, Shenzhen, Guangdong 518129 (CN)
(74) Representative: Pfenning, Meinig & Partner mbB
(86) International application number: PCT/CN2022/116607
(87) International publication number: WO 2023/056809

(57) **Abstract**

Embodiments of this application provide a positioning method, an apparatus, and a system, so that a network side obtains accurate geographical location information of a terminal device in time in a satellite communication scenario. The method includes: After determining that a trigger condition occurs, an access network device sends first location information of a terminal device to a core network device, where the first location information includes a first tracking area identity TAI, and the first TAI is an identifier of a tracking area in which the terminal device is currently located. This application is applicable to the field of communication technologies.

## Description

This application claims priority to Chinese Patent Application No. 202111173124.6, filed with the China National Intellectual Property Administration on October 8, 2021 and entitled "POSITIONING METHOD, APPARATUS, AND SYSTEM", which is incorporated herein by reference in its entirety.

### TECHNICAL FIELD

This application relates to the field of communication technologies, and in particular, to a positioning method, an apparatus, and a system.

### BACKGROUND

In a mobile communication network, a network side (for example, an access and mobility management function (access and mobility management function, AMF)) needs to obtain accurate location information (UE location information, ULI) of user equipment (user equipment, UE) in time, to be specific, a tracking area (tracking area, TA) in which the UE is currently located (UE current TA), to perform an area-related operation on the UE. Area types include a forbidden area, a service area, a local area data network service area, and the like.

However, in a satellite communication scenario, due to a mobility feature of a satellite, a tracking area corresponding to a coverage area of the satellite always changes. In this case, currently, there is no related solution to how the network side obtains the accurate ULI in time.

### SUMMARY

Embodiments of this application provide a positioning method, an apparatus, and a system, so that a network side obtains accurate geographical location information of a terminal device in time in a satellite communication scenario.

To achieve the foregoing objective, the following technical solutions are used in embodiments of this application.

According to a first aspect, a positioning method is provided. A communication apparatus that performs the positioning method may be an access network device, or may be a module, for example, a chip or a chip system, used in the access network device. The following is described by using an example in which an execution body is the access network device. After determining that a trigger condition occurs, the access network device sends first location information of a terminal device to a core network device, where the first location information includes a first tracking area identity TAI, and the first TAI is an identifier of a tracking area in which the terminal device is currently located. Based on this solution, when determining that the trigger condition occurs, the access network device may report, to the core network device, the identifier of the tracking area in which the terminal device is currently located. Therefore, the core network device can obtain accurate ULI in time, so that an area-related operation can be performed.

With reference to the first aspect, in a possible implementation, that the access network device determines that the trigger condition occurs includes: After the access network device determines that the tracking area in which the terminal device is currently located cannot be identified, the access network device determines the tracking area in which the terminal device is currently located. For example, after determining that the tracking area in which the terminal device is currently located cannot be identified, the access network device may trigger an implicit subscription mechanism. To be specific, after determining that the tracking area in which the terminal device is currently located can be sensed, the access network device reports, to the core network device, the identifier of the tracking area in which the terminal device is currently located.

With reference to the first aspect, in a possible implementation, that the access network device determines that the trigger condition occurs includes: After the access network device receives a first message from the core network device, the access network device determines the tracking area in which the terminal device is currently located, where the first message is used to request a current location of the terminal device. For example, when sensing that location information reported by the access network device is inaccurate, the core network device triggers subscription to the current location of the terminal device from the access network device.

With reference to the first aspect, in a possible implementation, that the access network device determines that the trigger condition occurs includes: After the access network device receives a second message from the terminal device, the access network device determines the tracking area in which the terminal device is currently located, where the second message is used to request mobility update. In other words, in this embodiment of this application, a mobility update procedure may trigger the access network device to report, to the core network device in time, the identifier of the tracking area in which the terminal device is currently located.

With reference to the first aspect, in a possible implementation, that the access network device determines that the tracking area in which the terminal device is currently located cannot be identified includes: The access network device determines that currently obtained location information of the terminal device includes a plurality of TAIs. Alternatively, the access network device determines that currently obtained location information of the terminal device includes one TAI, but a location corresponding to the TAI included in the location information of the terminal device may be inconsistent with the current location of the terminal device.

With reference to the first aspect, in a possible implementation, the positioning method provided in this embodiment of this application further includes: The access network device sends a third message to the core network device, where the third message includes second location information of the terminal device and first indication information, the second location information includes a second TAI, and the first indication information indicates that the second location information of the terminal device is inaccurate. Alternatively, the access network device sends a fourth message to the core network device, where the fourth message includes third location information of the terminal device, and the third location information includes a plurality of TAIs. Based on this solution, after receiving the third message or the fourth message, the core network device may learn that location information of the terminal device that is reported by the access network device is inaccurate.

With reference to the first aspect, in a possible implementation, the second TAI is one of the plurality of TAIs included in the location information of the terminal device that is currently obtained by the access network device; or the second TAI is one TAI included in the location information of the terminal device that is currently obtained by the access network device.

According to a second aspect, a positioning method is provided. A communication apparatus that performs the positioning method may be a core network device, or may be a module, for example, a chip or a chip system, used in the core network device. The following is described by using an example in which an execution body is the core network device. After determining that a trigger condition occurs, the core network device sends a first message to an access network device, where the first message is used to request a current location of a terminal device. The core network device receives first location information of the terminal device from the access network device, where the first location information includes a first tracking area identity TAI, and the first TAI is an identifier of a tracking area in which the terminal device is currently located. Based on this solution, when determining that the trigger condition occurs, the core network device may subscribe to the current location of the terminal device from the access network device in time, so that after learning of the identifier of the tracking area in which the terminal device is currently located, the access network device immediately reports, to the core network device, the identifier of the tracking area in which the terminal device is currently located. Therefore, the core network device can obtain accurate ULI in time, so that an area-related operation is performed.

With reference to the second aspect, in a possible implementation, that the core network device determines that the trigger condition occurs includes: The core network device determines that received location information of the terminal device includes a plurality of TAIs. Alternatively, the core network device determines that first indication information is received, where the first indication information indicates that location information of the terminal device that is received by the core network device is inaccurate.

With reference to the second aspect, in a possible implementation, the positioning method provided in this embodiment of this application further includes: The core network device determines, based on the first location information of the terminal device, that the terminal device is located in a forbidden area. The core network device sends a reject TAI to the terminal device. Alternatively, the core network device sends geographical location information corresponding to a reject TAI to the terminal device. Based on this solution, after receiving the reject TAI or the geographical location information corresponding to the reject TAI sent by the core network device, the terminal device may update a locally maintained forbidden area list. Further, after obtaining information about a current geographical location of the terminal device, the terminal device may determine, based on the information about the current geographical location of the terminal device and the forbidden area list, whether to initiate a signaling procedure. In this way, signaling consumption caused by a final procedure failure due to blind initiation of the signaling procedure by the terminal device can be avoided, and therefore signaling consumption of the terminal device can be reduced.

With reference to the second aspect, in a possible implementation, the positioning method provided in this embodiment of this application further includes: The core network device sends service area restriction information in a geographical location form and/or local area data network service area information in a geographical location form to the terminal device. Based on this solution, after receiving the service area restriction information in the geographical location form and/or the local area data network service area information in the geographical location form, the terminal device may directly perform an area-related operation based on the service area restriction information in the geographical location form and/or the local area data network service area information in the geographical location form after obtaining the information about the current geographical location of the terminal device, so that signaling consumption caused by a final request failure due to blind initiation of a related request by the terminal device is avoided, and therefore signaling consumption of the terminal device can be reduced.

According to a third aspect, a positioning method is provided. A communication apparatus that performs the positioning method may be a terminal device, or may be a module, for example, a chip or a chip system, used in the terminal device. The following is described by using an example in which an execution body is the terminal device. The terminal device receives a reject tracking area identity TAI from a core network device. The terminal device determines, based on a locally maintained mapping relationship between a TAI and geographical location information, geographical location information corresponding to the reject TAI. The terminal device adds the geographical location information corresponding to the reject TAI to a locally maintained forbidden area list. Based on this solution, because the terminal device may locally maintain the mapping relationship between a TAI and geographical location information, after receiving the reject TAI sent by the core network device, the terminal device may determine, based on the locally maintained mapping relationship between a TAI and geographical location information, the geographical location information corresponding to the reject TAI, and further add the geographical location information corresponding to the reject TAI to the locally maintained forbidden area list. In other words, in this embodiment of this application, the forbidden area list locally maintained by the terminal device may exist in a geographical location information form. Further, after obtaining information about a current geographical location of the terminal device, the terminal device may directly perform lookup in the locally maintained forbidden area list to determine whether to initiate a signaling procedure. In this way, signaling consumption caused by a final procedure failure due to blind initiation of the signaling procedure by the terminal device can be avoided, and therefore signaling consumption of the terminal device can be reduced.

With reference to the third aspect, in a possible implementation, the positioning method provided in this embodiment of this application further includes: The terminal device determines, based on information about a current geographical location of the terminal device and the forbidden area list, whether to initiate a signaling procedure.

With reference to the third aspect, in a possible implementation, that the terminal device determines, based on information about a current geographical location of the terminal device and the forbidden area list, whether to initiate a signaling procedure includes: When the information about the current geographical location of the terminal device is in the forbidden area list, the terminal device determines that initiation of the signaling procedure is not allowed, or the terminal device determines that initiation of the signaling procedure is allowed again after the terminal device moves for preset time and/or a preset distance.

According to a fourth aspect, a positioning method is provided. A communication apparatus that performs the positioning method may be a terminal device, or may be a module, for example, a chip or a chip system, used in the terminal device. The following is described by using an example in which an execution body is the terminal device. The terminal device receives a reject tracking area identity TAI from a core network device. The terminal device adds the reject TAI to a locally maintained forbidden area list. After the terminal device obtains information about a current geographical location of the terminal device, the terminal device determines, based on a locally maintained mapping relationship between a TAI and geographical location information, a TAI corresponding to the information about the current geographical location of the terminal device. The terminal device determines, based on the TAI corresponding to the information about the current geographical location of the terminal device and the forbidden area list, whether to initiate a signaling procedure. Based on this solution, in an aspect, in this embodiment of this application, the forbidden area list locally maintained by the terminal device exists in a TAI form. Therefore, after receiving the reject TAI from the core network device, the terminal device may add the reject TAI to the locally maintained forbidden area list. In this way, implementation is simple. In another aspect, in this embodiment of this application, the terminal device may locally maintain the mapping relationship between a TAI and geographical location information. Therefore, after obtaining the information about the current geographical location of the terminal device, the terminal device may determine, based on the locally maintained mapping relationship between a TAI and geographical location information, the TAI corresponding to the information about the current geographical location of the terminal device, so that the terminal device may perform lookup in the locally maintained forbidden area list to determine whether to initiate the signaling procedure. In this way, signaling consumption caused by a final procedure failure due to blind initiation of the signaling procedure by the terminal device can be avoided, and therefore signaling consumption of the terminal device can be reduced.

With reference to the fourth aspect, in a possible implementation, that the terminal device determines, based on the TAI corresponding to the information about the current geographical location of the terminal device and the forbidden area list, whether to initiate a signaling procedure includes: When the TAI corresponding to the information about the current geographical location of the terminal device is in the forbidden area list, the terminal device determines that initiation of the signaling procedure is not allowed, or the terminal device determines that initiation of the signaling procedure is allowed again after the terminal device moves for preset time and/or a preset distance.

With reference to the third aspect or the fourth aspect, in a possible implementation, the positioning method provided in this embodiment of this application further includes: The terminal device receives service area restriction information in a TAI form from the core network device. The terminal device determines, based on the locally maintained mapping relationship between a TAI and geographical location information, the TAI corresponding to the information about the current geographical location of the terminal device. The terminal device determines, based on the TAI corresponding to the information about the current geographical location of the terminal device and the service area restriction information, whether to initiate a service-related request. Based on this solution, in this embodiment of this application, the terminal device may locally maintain the mapping relationship between a TAI and geographical location information. Therefore, after obtaining the information about the current geographical location of the terminal device, the terminal device may determine, based on the locally maintained mapping relationship between a TAI and geographical location information, the TAI corresponding to the information about the current geographical location of the terminal device. Further, the terminal device may determine, based on the service area restriction information in the TAI form, whether to initiate the service-related request. In this way, signaling consumption caused by a final service request failure due to blind initiation of the service-related request by the terminal device can be avoided, and therefore signaling consumption of the terminal device can be reduced.

With reference to the third aspect or the fourth aspect, in a possible implementation, that the terminal device determines, based on the TAI corresponding to the information about the current geographical location of the terminal device and the service area restriction information, whether to initiate a service-related request includes: When the service area restriction information includes service allowed area information, if the TAI corresponding to the information about the current geographical location of the terminal device is not in the service area restriction information, the terminal device determines that initiation of the service-related request is not allowed, or the terminal device determines that initiation of the service-related request is allowed again after the terminal device moves for preset time and/or a preset distance.

With reference to the third aspect or the fourth aspect, in a possible implementation, that the terminal device determines, based on the TAI corresponding to the information about the current geographical location of the terminal device and the service area restriction information, whether to initiate a service-related request includes: When the service area restriction information includes service non-allowed area information, if the TAI corresponding to the information about the current geographical location of the terminal device is in the service area restriction information, the terminal device determines that initiation of the service-related request is not allowed, or the terminal device determines that initiation of the service-related request is allowed again after the terminal device moves for preset time and/or a preset distance.

According to a fifth aspect, a positioning method is provided. A communication apparatus that performs the positioning method may be a terminal device, or may be a module, for example, a chip or a chip system, used in the terminal device. The following is described by using an example in which an execution body is the terminal device. The terminal device receives geographical location information that corresponds to a reject tracking area identity TAI and that is from a core network device. The terminal device adds the geographical location information corresponding to the reject TAI to a locally maintained forbidden area list. Based on this solution, because the core network device may perform conversion between a TAI form and a geographical location information form, the terminal device may receive the geographical location information corresponding to the reject TAI from the core network device, and further add the geographical location information corresponding to the reject TAI to the locally maintained forbidden area list. In other words, in this embodiment of this application, the forbidden area list locally maintained by the terminal device may exist in the geographical location information form. Further, after obtaining information about a current geographical location of the terminal device, the terminal device may directly perform lookup in the locally maintained forbidden area list to determine whether to initiate a signaling procedure. In this way, signaling consumption caused by a final procedure failure due to blind initiation of the signaling procedure by the terminal device can be avoided, and therefore signaling consumption of the terminal device can be reduced.

With reference to the fifth aspect, in a possible implementation, the positioning method provided in this embodiment of this application further includes: The terminal device determines, based on information about a current geographical location of the terminal device and the forbidden area list, whether to initiate a signaling procedure.

With reference to the fifth aspect, in a possible implementation, that the terminal device determines, based on information about a current geographical location of the terminal device and the forbidden area list, whether to initiate a signaling procedure includes: When the information about the current geographical location of the terminal device is in the forbidden area list, the terminal device determines that initiation of the signaling procedure is not allowed, or the terminal device determines that initiation of the signaling procedure is allowed again after the terminal device moves for preset time and/or a preset distance.

With reference to the fifth aspect, in a possible implementation, the positioning method provided in this embodiment of this application further includes: The terminal device receives service area restriction information in a geographical location form from the core network device. The terminal device determines, based on the information about the current geographical location of the terminal device and the service area restriction information, whether to initiate a service-related request. Based on this solution, because the core network device may perform conversion between a TAI form and a geographical location information form, the terminal device may receive the service area restriction information in the geographical location form from the core network device, so that after obtaining the information about the current geographical location of the terminal device, the terminal device may directly determine, based on the service area restriction information in the geographical location form, whether to initiate the service-related request. In this way, signaling consumption caused by a final service request failure due to blind initiation of the service-related request by the terminal device can be avoided, and therefore signaling consumption of the terminal device can be reduced.

According to a sixth aspect, a positioning method is provided. A communication apparatus that performs the positioning method may be a terminal device, or may be a module, for example, a chip or a chip system, used in the terminal device. The following is described by using an example in which an execution body is the terminal device. The terminal device receives service area restriction information in a geographical location form from a core network device. The terminal device determines, based on information about a current geographical location of the terminal device and the service area restriction information, whether to initiate a service-related request. Based on this solution, because the core network device may perform conversion between a TAI form and a geographical location information form, the terminal device may receive the service area restriction information in the geographical location form from the core network device, so that after obtaining the information about the current geographical location of the terminal device, the terminal device may directly determine, based on the service area restriction information in the geographical location form, whether to initiate the service-related request. In this way, signaling consumption caused by a final service request failure due to blind initiation of the service-related request by the terminal device can be avoided, and therefore signaling consumption of the terminal device can be reduced.

With reference to the fifth aspect or the sixth aspect, in a possible implementation, that the terminal device determines, based on information about a current geographical location of the terminal device and the service area restriction information, whether to initiate a service-related request includes: When the service area restriction information includes service allowed area information, if the information about the current geographical location of the terminal device is not in the service area restriction information, the terminal device determines that initiation of the service-related request is not allowed, or the terminal device determines that initiation of the service-related request is allowed again after the terminal device moves for preset time and/or a preset distance.

With reference to the fifth aspect or the sixth aspect, in a possible implementation, that the terminal device determines, based on information about a current geographical location of the terminal device and the service area restriction information, whether to initiate a service-related request includes: When the service area restriction information includes service non-allowed area information, if the information about the current geographical location of the terminal device is in the service area restriction information, the terminal device determines that initiation of the service-related request is not allowed, or the terminal device determines that initiation of the service-related request is allowed again after the terminal device moves for preset time and/or a preset distance.

According to a seventh aspect, a positioning method is provided. A communication apparatus that performs the positioning method may be a terminal device, or may be a module, for example, a chip or a chip system, used in the terminal device. The following is described by using an example in which an execution body is the terminal device. The terminal device sends a fifth message to a core network device, where the fifth message is used by the terminal device to request to initially access a network or access a service. When the terminal device determines to access the network through a satellite, or when the terminal device determines that a plurality of tracking area codes TACs are received, or when the terminal device determines that second indication information is received, after the terminal device receives a sixth message from the core network device, the terminal device triggers mobility update, where the second indication information indicates that a TAC included in a satellite broadcast message is inaccurate, and the sixth message indicates that the terminal device is allowed to access the network or access the service. Based on this solution, the terminal device may trigger a mobility update procedure in time, and report accurate geographical location information of the terminal device to an access network device in the mobility update procedure. Further, after identifying the mobility update procedure and determining, based on the accurate geographical location information of the terminal device, an identifier of a tracking area in which the terminal device is currently located, the access network device reports, to the core network device in time, the identifier of the tracking area in which the terminal device is currently located, so that the core network device obtains accurate ULI in time, and therefore an area-related operation can be performed.

According to an eighth aspect, a communication apparatus is provided, and is configured to implement the foregoing method. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions. The communication apparatus may be the access network device according to the first aspect or an apparatus including the access network device. Alternatively, the communication apparatus may be the core network device according to the second aspect or an apparatus including the core network device. Alternatively, the communication apparatus may be the terminal device according to the third aspect, the fourth aspect, the fifth aspect, the sixth aspect, or the seventh aspect, or an apparatus including the terminal device.

According to a ninth aspect, a communication apparatus is provided. The apparatus includes a processor. The processor is configured to: be coupled to a memory; and after reading computer instructions stored in the memory, perform the method according to any one of the foregoing aspects according to the instructions.

With reference to the ninth aspect, in a possible implementation, the communication apparatus further includes the memory. The memory is configured to store the computer instructions.

With reference to the ninth aspect, in a possible implementation, the communication apparatus further includes a communication interface. The communication interface is used by the communication apparatus to communicate with another device. For example, the communication interface may be a transceiver, an input/output interface, an interface circuit, an output circuit, an input circuit, a pin, or a related circuit.

With reference to the ninth aspect, in a possible implementation, the communication apparatus may be a chip or a chip system. When the communication apparatus is a chip system, the communication apparatus may include a chip, or may include a chip and another discrete component.

With reference to the ninth aspect, in a possible implementation, when the communication apparatus is a chip or a chip system, the communication interface may be an input/output interface, an interface circuit, an output circuit, an input circuit, a pin, a related circuit, or the like on the chip or the chip system. The processor may also be embodied as a processing circuit or a logic circuit.

According to a tenth aspect, a computer-readable storage medium is provided. The computer-readable storage medium stores instructions, and when the instructions are run on a computer, the computer is enabled to perform the method according to any one of the foregoing aspects.

According to an eleventh aspect, a computer program product including instructions is provided. When the computer program product runs on a computer, the computer is enabled to perform the method according to any one of the foregoing aspects.

According to a twelfth aspect, a communication apparatus (where for example, the communication apparatus may be a chip or a chip system) is provided. The communication apparatus includes a processor, configured to implement the functions in any one of the foregoing aspects. In a possible implementation, the communication apparatus further includes a memory. The memory is configured to store program instructions and data that are necessary. When the communication apparatus is a chip system, the communication apparatus may include a chip, or may include a chip and another discrete component.

For technical effects brought by any possible implementation of the eighth aspect to the twelfth aspect, refer to the technical effects brought by different implementations of any one of the first aspect to the seventh aspect. Details are not described herein again.

According to a thirteenth aspect, a communication system is provided. The communication system includes the access network device according to the first aspect and the core network device according to the second aspect.

With reference to the thirteenth aspect, in a possible implementation, the communication system further includes the terminal device according to any one of the third aspect to the seventh aspect.

### BRIEF DESCRIPTION OF DRAWINGS

FIG. 1 is a schematic diagram of an architecture of a communication system to which embodiments of this application are applied;
FIG. 2 is a schematic diagram of a device form of an NR-RAN device according to an embodiment of this application;
FIG. 3 is a schematic diagram of a device form of another NR-RAN device according to an embodiment of this application;
FIG. 4 is a schematic diagram of a service-oriented architecture of a 5G network defined in 3GPP;
FIG. 5 is a schematic diagram of a reference point-based 5G network architecture defined in 3GPP;
FIG. 6 is a schematic diagram of a structure of a communication device according to an embodiment of this application;
FIG. 7 is a schematic diagram of a satellite communication soft handover scenario according to an embodiment of this application;
FIG. 8 is a schematic diagram of a satellite communication hard handover scenario according to an embodiment of this application;
FIG. 9 is a schematic flowchart of a positioning method according to an embodiment of this application;
FIG. 10 is a schematic flowchart of another positioning method according to an embodiment of this application;
FIG. 11 is a schematic flowchart of still another positioning method according to an embodiment of this application;
FIG. 12 is a schematic flowchart of still another positioning method according to an embodiment of this application;
FIG. 13 is a schematic flowchart of still another positioning method according to an embodiment of this application;
FIG. 14 is a schematic flowchart of still another positioning method according to an embodiment of this application;
FIG. 15 is a schematic flowchart of still another positioning method according to an embodiment of this application;
FIG. 16 is a schematic flowchart of still another positioning method according to an embodiment of this application;
FIG. 17 shows a positioning method in a 5G mobile communication system according to an embodiment of this application;
FIG. 18 shows another positioning method in a 5G mobile communication system according to an embodiment of this application;
FIG. 19 shows still another positioning method in a 5G mobile communication system according to an embodiment of this application; and
FIG. 20 is a schematic diagram of a structure of another communication apparatus according to an embodiment of this application.

### DESCRIPTION OF EMBODIMENTS

The following describes technical solutions in embodiments of this application with reference to accompanying drawings in embodiments of this application. Unless otherwise specified, "/" in descriptions of this application represents an "or" relationship between associated objects. For example, A/B may represent A or B. In this application, "and/or" is merely an association relationship for describing associated objects, and indicates that three relationships may exist. For example, A and/or B may indicate the following three cases: Only A exists, both A and B exist, and only B exists, where A and B may be singular or plural. In addition, in the descriptions of this application, unless otherwise specified, "a plurality of" means two or more than two. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions and purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, a network architecture and a service scenario described in embodiments of this application are intended to describe the technical solutions of embodiments of this application more clearly, and do not constitute a limitation on the technical solutions provided in embodiments of this application. A person of ordinary skill in the art may know: With evolution of the network architecture and emergence of new service scenarios, the technical solutions provided in embodiments of this application are also applicable to similar technical problems.

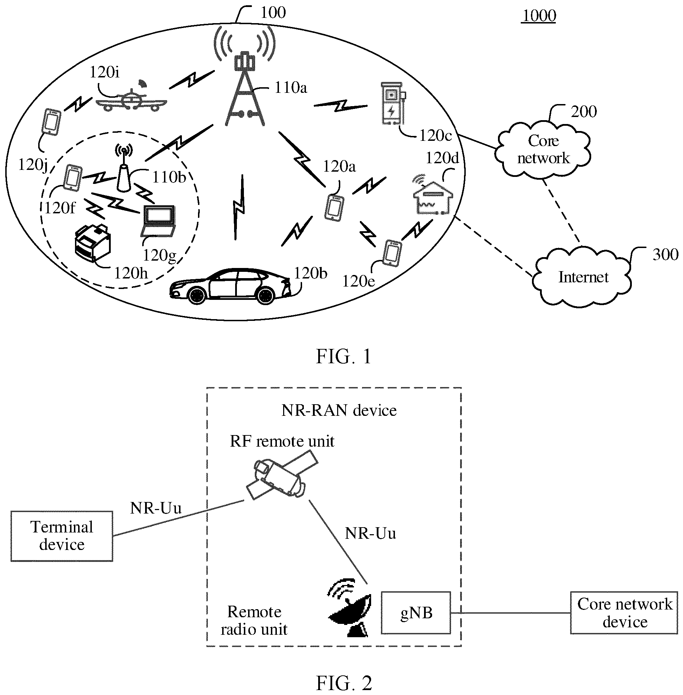

FIG. 1 is a schematic diagram of an architecture of a communication system 1000 to which embodiments of this application are applied. As shown in FIG. 1, the communication system includes a radio access network 100 and a core network 200. Optionally, the communication system 1000 may further include an internet 300. The radio access network 100 may include at least one access network device (for example, 110a and 110b in FIG. 1), and may further include at least one terminal device (for example, 120a to 120j in FIG. 1). The terminal device is connected to the access network device in a wireless manner, and the access network device is connected to a core network device in the core network 200 in a wireless or wired manner. The core network device and the access network device may be different physical devices that are independent of each other, or functions of the core network device and logical functions of the access network device may be integrated into a same physical device, or some functions of the core network device and some functions of the access network device may be integrated into one physical device. Terminal devices or access network devices may be connected to each other in a wired or wireless manner. FIG. 1 is merely a schematic diagram. The communication system 1000 may further include other network devices, for example, may further include a wireless relay device and a wireless backhaul device. This is not shown in FIG. 1.

In embodiments of this application, the access network device may also be referred to as a radio access network (radio access network, RAN) device, and is a device that provides satellite access for the terminal device. Through division based on satellite functions, the access network device may include a satellite, a ground station, and a base station.

A 5th generation (5th generation, 5G) mobile communication system (which may also be referred to as a new radio (new radio, NR) system) is used as an example. The access network device may be an NR-RAN device, and the NR-RAN device includes a satellite, a ground station, and a next generation NodeB (next generation NodeB, gNB) in the 5G mobile communication system.

In a possible implementation, as shown in FIG. 2, the gNB is deployed on the ground; the satellite is used as a radio frequency (radio frequency, RF) remote unit (remote unit), and mainly completes functions such as intermediate frequency processing (for example, digital in-phase component (in-phase component, I)/quadrature (quadrature, Q) component modulation and demodulation, up-down conversion, digital-to-analog (digital-to-analog, DA)/analog-to-digital (analog-to-digital, AD) conversion), radio frequency processing, and duplexing of signals; and the ground station is used as another part of the radio frequency remote unit, namely, a remote radio unit (remote radio unit). The terminal device communicates with the core network device through the satellite and the gNB. A communication interface between the terminal device and the RF remote unit is an NR-Uu interface, and a communication interface between the RF remote unit and the remote radio unit is an NR-Uu interface. The foregoing satellite communication mode is referred to as a transparent transmission mode, and a corresponding NR-RAN device may be considered as a transparent satellite enabled (transparent satellite enabled) NR-RAN device. The satellite relays signaling or data between the terminal device and the gNB.

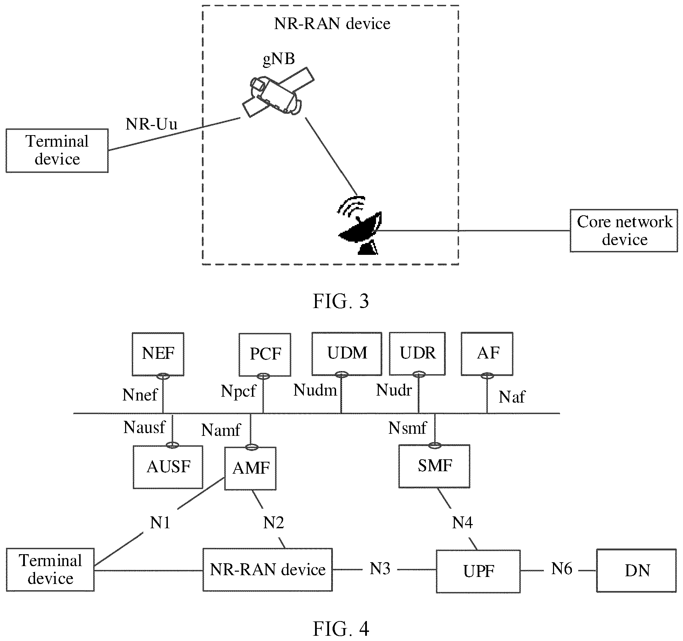

In another possible implementation, as shown in FIG. 3, the satellite and the base station are integrated, in other words, the satellite is used as the gNB (next generation NB). The terminal device communicates with the core network device through the satellite and the ground station. A communication interface between the terminal device and the gNB is an NR-Uu interface. This satellite communication mode is referred to as a regenerative transmission mode, and a corresponding NR-RAN device may be considered as a transparent satellite enabled (regenerative satellite enabled) NR-RAN device. Certainly, in the regenerative transmission mode, the satellite may alternatively be used as a gNB data unit (gNB data Unit, gNB-DU). This is not specifically limited in embodiments of this application. In conclusion, in the regenerative transmission mode, the satellite has a signal conversion or processing capability.

It should be noted that, in the foregoing embodiments, only the 5G mobile communication system is used as an example to provide two example schematic diagrams of deployment of the NR-RAN device when the NR-RAN device provides satellite access for the terminal device. Certainly, the access network device may be deployed in another possible form. A specific device form of the access network device is not limited in embodiments of this application. This is uniformly described herein, and details are not described below.

In embodiments of this application, the core network device may include, for example, one or more of a mobility management network element, a session management network element, a user plane network element, an authentication server function network element, a unified data repository network element, a data management network element, a network exposure function network element, a policy control network element, or an application function network element.

The mobility management network element is mainly responsible for mobility management in a mobile network, for example, user location update, user registration with a network, and user handover. In the 5G mobile communication system, the mobility management network element may be an AMF network element. In a future communication system, the mobility management network element may still be the AMF, or may have another name. This is not limited in embodiments of this application.

The session management network element is mainly responsible for session management in the mobile network, for example, session establishment, modification, and release. Specific functions include, for example, internet protocol (internet protocol, IP) address allocation, and selection of a user plane function that provides a packet forwarding function. In the 5G mobile communication system, the session management network element may be an SMF. In a future communication system, the session management network element may still be the SMF, or may have another name. This is not limited in this application.

The user plane network element is mainly responsible for user packet processing, for example, forwarding and charging. In the 5G mobile communication system, the user plane network element may be a user plane function (user plane function, UPF). In a future communication system, the user plane network element may still be the UPF, or may have another name. This is not limited in this application.

The authentication server function network element is mainly responsible for providing an authentication function and supporting authentication of 3GPP access and non-3GPP (Non-3GPP) access. In the 5G mobile communication system, the authentication server function network element may be an authentication server function (authentication server function, AUSF). In a future communication system, the authentication server function network element may still be the AUSF, or may have another name. This is not limited in this application.

The unified data repository network element is mainly responsible for storing structured data, and stored content includes subscription data, policy data, externally exposed structured data, and application-related data. In the 5G mobile communication system, the unified data repository network element may be a unified data repository (unified data repository, UDR). In a future communication system, the unified data repository network element may still be the UDR, or may have another name. This is not limited in this application.

The data management network element is mainly responsible for user identifier processing, access authentication, registration, mobility management, or the like. In the 5G mobile communication system, the data management network element may be a unified data management (unified data management, UDM). In a future communication system, the data management network element may still be the UDM, or may have another name. This is not limited in this application.

The network exposure function network element mainly provides a service, so that a 3GPP network can securely provide a network service capability to a third-party service provider, namely, the application function network element. In the 5G communication system, the network exposure function network element may be a network exposure function (network exposure function, NEF). In a future communication system, the network exposure function network element may still be the NEF, or may have another name. This is not limited in this application.

The policy control network element includes a user subscription data management function, a policy control function, a charging policy control function, a quality of service (quality of service, QoS) control function, and the like, and is configured to guide a unified policy framework for network behavior and provide policy rule information and the like for a control plane function network element (for example, the mobility management network element or the session management network element). In the 5G mobile communication system, the policy control network element may be a PCF. In a future communication system, the policy control function network element may still be the PCF, or may have another name. This is not limited in embodiments of this application.

The application function network element is mainly responsible for providing a service for a 3GPP network, for example, affecting service routing, and interacting with the policy control network element for policy control. In the 5G mobile communication system, the application function network element may be an application function (application function, AF). In a future communication system, the application function network element may still be the AF, or may have another name. This is not limited in this application.

A 5G mobile communication system is used as an example, and a schematic diagram of a service-oriented architecture of a 5G network defined in the 3rd generation partnership project (3rd generation partnership project, 3GPP) technology standard (technology standard, TS) 23.501 is shown in FIG. 4. As shown in FIG. 4, a terminal device accesses the 5G network through a RAN device, the terminal device communicates with an AMF through an N1 interface (N1 for short), the RAN device communicates with the AMF through an N2 interface (N2 for short), the RAN device communicates with a UPF through an N3 interface (N3 for short), an SMF communicates with the UPF through an N4 interface (N4 for short), and the UPF accesses a DN through an N6 interface (N6 for short). In addition, control plane functions such as an AUSF, the AMF, the SMF, an NEF, a PCF, a UDM, a UDR, and an AF shown in FIG. 4 interact with each other through service-oriented interfaces. For example, a service-oriented interface externally provided by the AUSF is Nausf, a service-oriented interface externally provided by the AMF is Namf, a service-oriented interface externally provided by the SMF is Nsmf, a service-oriented interface externally provided by the NEF is Nnef, a service-oriented interface externally provided by the PCF is Npcf, a service-oriented interface externally provided by the UDM is Nudm, a service-oriented interface externally provided by the UDR is Nudr, and a service-oriented interface externally provided by the AF is Naf. For related function descriptions and interface descriptions, refer to a diagram of a 5G system architecture (5G system architecture) in the 23.501 standard. Details are not described herein.

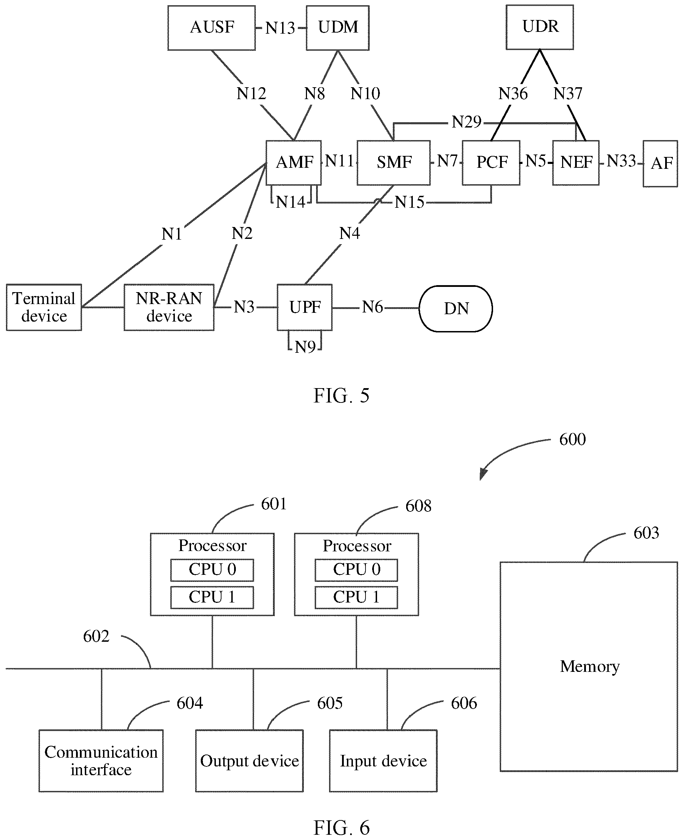

FIG. 5 is a schematic diagram of a reference point-based 5G network architecture corresponding to FIG. 4. As shown in FIG. 5, the terminal device accesses the 5G network through the RAN device, the terminal device communicates with the AMF through the N1 interface (N1 for short), the RAN device communicates with the AMF through the N2 interface (N2 for short), the RAN device communicates with the UPF through the N3 interface (N3 for short), different UPFs communicate with each other through an N9 interface (N9 for short), and the UPF accesses the DN through the N6 interface (N6 for short). In addition, the SMF communicates with the UPF through the N4 interface (N4 for short), the AMF communicates with the SMF through an N11 interface (N11 for short), the AMF communicates with the UDM through an N8 interface (N8 for short), the AMF communicates with the AUSF through an N12 interface (N12 for short), the AMF communicates with the PCF through an N15 interface (N15 for short), different AMFs communicate with each other through an N14 interface (N14 for short), the SMF communicates with the PCF through an N7 interface (N7 for short), the SMF communicates with the UDM through an N10 interface (N10 for short), the SMF communicates with the NEF through an N29 interface (N29 for short), the PCF communicates with the NEF through an N5 interface (N5 for short), the UDR communicates with the PCF through an N36 interface (N36 for short), the UDR communicates with the NEF through an N37 interface (N37 for short), and the UDM communicates with the AUSF through an N13 interface (N13 for short).

It should be noted that FIG. 4 or FIG. 5 shows only some network elements in the 5G network architecture as an example. Certainly, the 5G network architecture may further include another network element, for example, a network function repository function (network exposure function Repository Function, NRF) or a charging function (charging function, CHF). This is not specifically limited in embodiments of this application.

Optionally, the terminal device in embodiments of this application may be a device configured to implement a wireless communication function, for example, a terminal or a chip that may be used in the terminal. The terminal device may be deployed on land, where the deployment includes indoor or outdoor, and handheld or vehicle-mounted deployment, or may be deployed on water (for example, on a ship), or may be deployed in air (for example, on an airplane, a balloon, or a satellite). The terminal may be UE, an access terminal, a terminal unit, a terminal station, a mobile station, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device or a wearable device, an unmanned aerial vehicle (unmanned aerial vehicle, UAV) and an unmanned aerial vehicle controller (UAV controller, UAVC), a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal may be mobile or fixed.

Optionally, the terminal device, the access network device, or the core network device in embodiments of this application may also be referred to as a communication apparatus or a communication device, and may be a general-purpose device or a dedicated device. This is not specifically limited in embodiments of this application.

Optionally, related functions of modules in the terminal device, the access network device, or the core network device in embodiments of this application may be implemented by one device, or may be jointly implemented by a plurality of devices, or may be implemented by one or more functional modules in one device. This is not specifically limited in embodiments of this application. It may be understood that the foregoing function may be a network element in a hardware device, a software function running on dedicated hardware, a combination of hardware and software, or a virtualized function instantiated on a platform (for example, a cloud platform).

For example, related functions of the terminal device, the access network device, or the core network device in embodiments of this application may be implemented by a communication device 600 in FIG. 6. FIG. 6 is a schematic diagram of a structure of the communication device 600 according to an embodiment of this application. The communication device 600 includes one or more processors 601, a communication line 602, and at least one communication interface (where in FIG. 6, that a communication interface 604 and one processor 601 are included is merely used as an example for description). Optionally, the communication device 600 may further include a memory 603.

The processor 601 may be a general-purpose central processing unit (central processing unit, CPU), a microprocessor, an application-specific integrated circuit (application-specific integrated circuit, ASIC), or one or more integrated circuits configured to control program execution in the solutions of this application.

The communication line 602 may include a path for connecting different components.

The communication interface 604 may be a transceiver module, configured to communicate with another device or a communication network, for example, an Ethernet, a RAN, or a wireless local area network (wireless local area network, WLAN). For example, the transceiver module may be an apparatus such as a transceiver or a transceiver machine. Optionally, the communication interface 604 may alternatively be a transceiver circuit located in the processor 601, to implement signal input and signal output of the processor.

The memory 603 may be an apparatus having a storage function. For example, the memory 603 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in an instruction form or a data structure form and that can be accessed by a computer. However, the memory 603 is not limited thereto. The memory may exist independently, and is connected to the processor through the communication line 602. The memory may alternatively be integrated with the processor.

The memory 603 is configured to store computer-executable instructions for performing the solutions of this application, and the processor 601 controls execution. The processor 601 is configured to execute the computer-executable instructions stored in the memory 603, to implement the positioning method provided in embodiments of this application.

Alternatively, optionally, in embodiments of this application, the processor 601 may perform processing-related functions in the positioning method provided in the following embodiments of this application, and the communication interface 604 is responsible for communicating with another device or a communication network. This is not specifically limited in embodiments of this application.

Optionally, the computer-executable instructions in embodiments of this application may also be referred to as application program code. This is not specifically limited in embodiments of this application.

During specific implementation, in an embodiment, the processor 601 may include one or more CPUs, for example, a CPU 0 and a CPU 1 in FIG. 6.

During specific implementation, in an embodiment, the communication device 600 may include a plurality of processors, for example, the processor 601 and a processor 608 in FIG. 6. Each of these processors may be a single-core (single-core) processor, or may be a multi-core (multi-core) processor. The processor herein may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each type of computing device may include one or more cores for executing software instructions to perform an operation or processing.

During specific implementation, in an embodiment, the communication device 600 may further include an output device 605 and an input device 606. The output device 605 communicates with the processor 601, and may display information in a plurality of manners. For example, the output device 605 may be a liquid crystal display (liquid crystal display, LCD), a light emitting diode (light emitting diode, LED) display device, a cathode ray tube (cathode ray tube, CRT) display device, or a projector (projector). The input device 606 communicates with the processor 601, and may receive an input of a user in a plurality of manners. For example, the input device 606 may be a mouse, a keyboard, a touchscreen device, or a sensing device.

The communication device 600 sometimes may also be referred to as a communication apparatus, and may be a general-purpose device or a dedicated device. For example, the communication device 600 may be a desktop computer, a portable computer, a network server, a palmtop computer (personal digital assistant, PDA), a mobile phone, a tablet computer, a wireless terminal device, an embedded device, the foregoing terminal device, the foregoing network device, or a device having a structure similar to that in FIG. 6. A type of the communication device 600 is not limited in embodiments of this application.

The following describes in detail the positioning method provided in embodiments of this application with reference to the foregoing descriptions in FIG. 1 to FIG. 6.

First, related descriptions of a soft handover scenario and a hard handover scenario that exist when a tracking area corresponding to a coverage area of a satellite changes due to a mobility feature of the satellite in a satellite communication scenario to which embodiments of this application are applicable are provided.

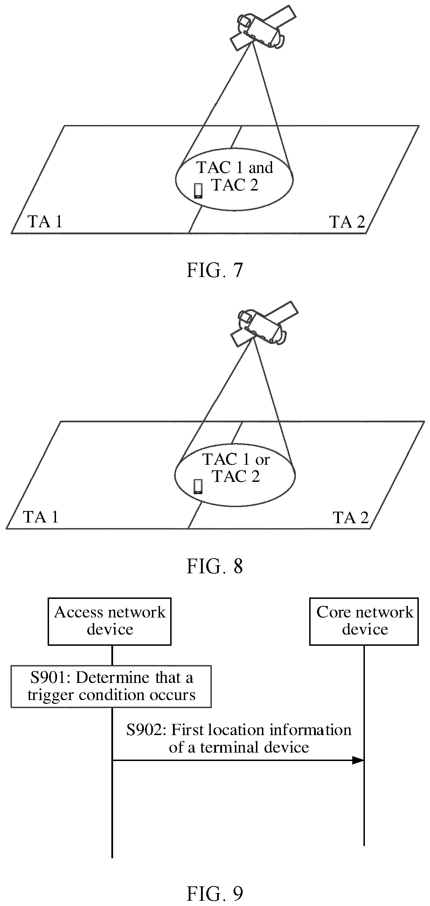

It is assumed that satellite coverage areas include a TA 1 and a TA 2. In this case, the soft handover scenario is shown in FIG. 7, and a broadcast message sent by an access network device includes both a tracking area code (tracking area code, TAC) 1 and a TAC 2 (that is, all tracking areas covered by the satellite). The hard handover scenario is shown in FIG. 8, and a broadcast message sent by an access network device includes only a TAC 1 or a TAC 2 (that is, one of a plurality of tracking areas covered by the satellite). Whether the broadcast message sent by the access network device includes the TAC 1 or the TAC 2 is an internal implementation of the access network device. This is not specifically limited in embodiments of this application. In conclusion, location information broadcast by the access network device may be considered as unreliable or inaccurate location information.

It should be noted that in embodiments of this application, in addition to a TAC field, the satellite broadcast message further includes a PLMN ID, a cell identifier, and the like. This is not specifically limited in embodiments of this application. A tracking area identity (tracking area identity, TAI) in a subsequent embodiment is jointly formed by a PLMN ID and a TAC. This is uniformly described herein, and details are not described below.

Second, descriptions of different types of areas and related functions in embodiments of this application are provided, as shown in Table 1.

**Table 1**

| Type | Functions |
|---|---|
| Forbidden area (forbidden area) | Core network side behavior: In an access process of a terminal device, a core network device (for example, an AMF in a 5G mobile communication system) checks whether an area accessed by the terminal device is a forbidden area. If the terminal device is in a forbidden area, the terminal device is restricted from initiating a signaling procedure. For example, the terminal device is restricted from initiating user registration. |
| | Access network side behavior: The core network device (for example, the AMF in the 5G mobile communication system) sends a forbidden area list (forbidden area list) to the access network device, to select a target access network device in a handover scenario. |
| | Terminal device side behavior: The core network device (for example, the AMF in the 5G mobile communication system) does not deliver the forbidden area list to the terminal device. |
| | However, the terminal device locally generates a forbidden area list based on a reject cause value returned by the core network device. In other words, when receiving the corresponding reject cause value, the terminal device adds, to the forbidden area list, information about a tracking area in which the terminal device is currently located. |
| Service area restriction (service area restriction) | The service area restriction has two forms: service area restriction for a service allowed area (allowed area) and service area restriction for a service non-allowed area (non-allowed area). |
| | Core network side behavior: A terminal device triggers a data service, and a core network device (for example, an AMF in a 5G mobile communication system) checks whether the terminal device is in an area in which the data service is allowed to be performed. If the terminal device is not in the area in which the data service is allowed to be performed, the terminal device is restricted from initiating a service-related request. For example, the terminal device is restricted from using common data services (except an emergency call and a high-priority service). |
| | Terminal device side behavior: The terminal device receives service area restriction information from the core network device (for example, the AMF in the 5G mobile communication system). The terminal device determines service feasibility based on the service area restriction information and information about a tracking area in which the terminal device is currently located. |
| Local area data network (local area data network, LADN) service area (service area, SA) | Core network side behavior: A core network device (for example, an AMF in a 5G mobile communication system) determines whether a terminal device is in an LADN SA. |
| | Terminal device side behavior: The terminal device receives LADN SA information from the core network device (for example, the AMF in the 5G mobile communication system). |
| | The terminal device performs determining based on the LADN SA information and information about a tracking area in which the terminal device is currently located. When the terminal device is in the LADN SA, the terminal device is allowed to access an LADN network. Alternatively, when the terminal device is not in the LADN SA, the terminal device is not allowed to access an LADN network. |
| ... | |

It should be noted that, in embodiments of this application, information about a tracking area may include a TAI or geographical location information corresponding to the tracking area. The geographical location information in embodiments of this application may be represented by using a longitude, a latitude, a height, a beam identifier, a beam position (namely, a beam location), or the like. This is uniformly described herein, and details are not described below.

FIG. 9 shows a positioning method according to an embodiment of this application. The positioning method includes the following steps.

S901: An access network device determines that a trigger condition occurs.

S902: The access network device sends first location information of a terminal device to a core network device. Correspondingly, the core network device receives the first location information of the terminal device from the access network device, where the first location information includes a first TAI, and the first TAI is an identifier of a tracking area in which the terminal device is currently located.

For the foregoing steps S901 and S902, in a possible implementation, that an access network device determines that a trigger condition occurs includes: After the access network device determines that the tracking area in which the terminal device is currently located cannot be identified, the access network device determines the tracking area in which the terminal device is currently located. For example, after determining that the tracking area in which the terminal device is currently located cannot be identified, the access network device may trigger an implicit subscription mechanism. To be specific, after determining that the tracking area in which the terminal device is currently located can be sensed, the access network device reports, to the core network device, the identifier of the tracking area in which the terminal device is currently located.

In a possible implementation, in this embodiment of this application, a manner in which the access network device determines the tracking area in which the terminal device is currently located includes: The access network device determines, based on obtained accurate geographical location information of the terminal device, the tracking area in which the terminal device is currently located. For example, in this embodiment of this application, the access network device may receive the accurate geographical location information of the terminal device that is reported by the terminal device. The foregoing implementation is applicable to other embodiments of this application. This is uniformly described herein, and details are not described below again.

In this embodiment of this application, that the access network device determines that the tracking area in which the terminal device is currently located cannot be identified includes: The access network device determines that currently obtained location information of the terminal device includes a plurality of TAIs (for example, in the soft handover scenario shown in FIG. 7). Alternatively, the access network device determines that currently obtained location information of the terminal device includes one TAI, but a location corresponding to the TAI may be inconsistent with a current location of the terminal device (for example, in the hard handover scenario shown in FIG. 8).

It should be noted that, for example, in the hard handover scenario shown in FIG. 8, the access network device knows only that hard handover is currently performed, but cannot determine whether a TA corresponding to the TAI included in the location information of the terminal device is actually a TA in which the terminal device is currently located. There may be two cases: The TA corresponding to the TAI included in the location information of the terminal device is actually the TAin which the terminal device is currently located, or the TA corresponding to the TAI included in the location information of the terminal device is not the TA in which the terminal device is currently located. Therefore, in this scenario, the access network device determines that the location corresponding to the TAI may be inconsistent with the current location of the terminal device. In other words, the access network device determines that the location corresponding to the TAI cannot represent the current location of the terminal device, or the access network device determines that the tracking area in which the terminal device is currently located cannot be identified.

For the foregoing steps S901 and S902, in a possible implementation, that an access network device determines that a trigger condition occurs includes: After the access network device receives a first message from the core network device, the access network device determines the tracking area in which the terminal device is currently located, where the first message is used to request a current location of the terminal device. For example, when sensing that location information reported by the access network device is inaccurate, the core network device triggers subscription to the current location of the terminal device from the access network device, to be specific, sends, to the access network device, the first message used to request the current location of the terminal device. Further, after determining the identifier of the tracking area in which the terminal device is currently located, the access network device may report, to the core network device in time, the identifier of the tracking area in which the terminal device is currently located.

It should be noted that, in this embodiment of this application, that the core network device senses that the location information reported by the access network device is inaccurate may also be described as or replaced with that the core network device senses that the terminal device performs access through a satellite. This is uniformly described herein, and details are not described below again.

In a possible implementation, in this embodiment of this application, after the core network device triggers the subscription to the current location of the terminal device from the access network device, the access network device may further trigger subscription to the current location of the terminal device from the terminal device. Further, after access stratum (access stratum, AS) security between the terminal device and the access network device is established, the terminal device may report accurate geographical location information of the terminal device to the access network device in time, so that the access network device determines, based on the accurate geographical location information of the terminal device, the identifier of the tracking area in which the terminal device is currently located. Certainly, after the core network device triggers the subscription to the current location of the terminal device from the access network device, the access network device may not trigger the subscription to the current location of the terminal device from the terminal device. Instead, after the AS security between the terminal device and the access network device is established, the terminal device actively (for example, periodically) reports accurate geographical location information to the access network device. After obtaining the accurate geographical location information actively reported by the terminal device, the access network device determines, based on the accurate geographical location information of the terminal device, the identifier of the tracking area in which the terminal device is currently located. A manner in which the access network device obtains the accurate geographical location information of the terminal device in time is not specifically limited in this embodiment of this application.

For the foregoing steps S901 and S902, in a possible implementation, that an access network device determines that a trigger condition occurs includes: After the access network device receives a second message from the terminal device, the access network device determines the tracking area in which the terminal device is currently located, where the second message is used to request mobility update. In other words, in this embodiment of this application, a mobility update procedure may trigger the access network device to report, to the core network device in time, the identifier of the tracking area in which the terminal device is currently located. For example, the terminal device may report accurate geographical location information of the terminal device to the access network device in the mobility update procedure. After identifying the mobility update procedure and determining, based on the accurate geographical location information of the terminal device, the identifier of the tracking area in which the terminal device is currently located, the access network device reports, to the core network device in time, the identifier of the tracking area in which the terminal device is currently located.

In a possible implementation, before the AS security between the terminal device and the access network device is established, the positioning method provided in this embodiment of this application further includes: The access network device sends a third message to the core network device, where the third message includes second location information of the terminal device and first indication information, the second location information includes a second TAI, and the first indication information indicates that the second location information of the terminal device is inaccurate. For example, in the hard handover scenario shown in FIG. 8, the second TAI is the TAI included in the location information of the terminal device that is currently obtained by the access network device. Alternatively, for example, in the soft handover scenario shown in FIG. 7, the second TAI is one of the plurality of TAIs included in the location information of the terminal device that is currently obtained by the access network device. The TAI may be randomly selected by the access network device from the plurality of TAIs, or may be selected according to a specific rule. This is not specifically limited in this embodiment of this application.

After obtaining the second location information of the terminal device and the first indication information, the core network device may learn that the location information of the terminal device that is reported by the access network device is inaccurate. In other words, in this implementation, that the core network device learns that the location information of the terminal device that is reported by the access network device is inaccurate may be understood as that the core network device obtains the second location information of the terminal device and the first indication information. This is uniformly described herein, and details are not described below again.

In another possible implementation, before the AS security between the terminal device and the access network device is established, the positioning method provided in this embodiment of this application further includes: The access network device sends a fourth message to the core network device, where the fourth message includes third location information of the terminal device, and the third location information includes a plurality of TAIs. For example, in the soft handover scenario shown in FIG. 7, the third location information of the terminal device that is sent by the access network device to the core network device may include the plurality of TAIs.

After obtaining the third location information of the terminal device, the core network device may learn that the location information of the terminal device that is reported by the access network device is inaccurate. In other words, in this implementation, that the core network device learns that the location information of the terminal device that is reported by the access network device is inaccurate may be understood as that the core network device obtains the third location information of the terminal device. This is uniformly described herein, and details are not described below again.

According to the positioning method provided in this embodiment of this application, when determining that the trigger condition occurs, the access network device may report, to the core network device, the identifier of the tracking area in which the terminal device is currently located. Therefore, the core network device can obtain accurate ULI in time, so that an area-related operation in Table 1 can be performed.

Actions of the access network device in steps S901 and S902 may be performed by the processor 601 in the communication device 600 shown in FIG. 6 by invoking the application program code stored in the memory 603 to instruct the access network device to perform the actions. This is not limited in this embodiment.

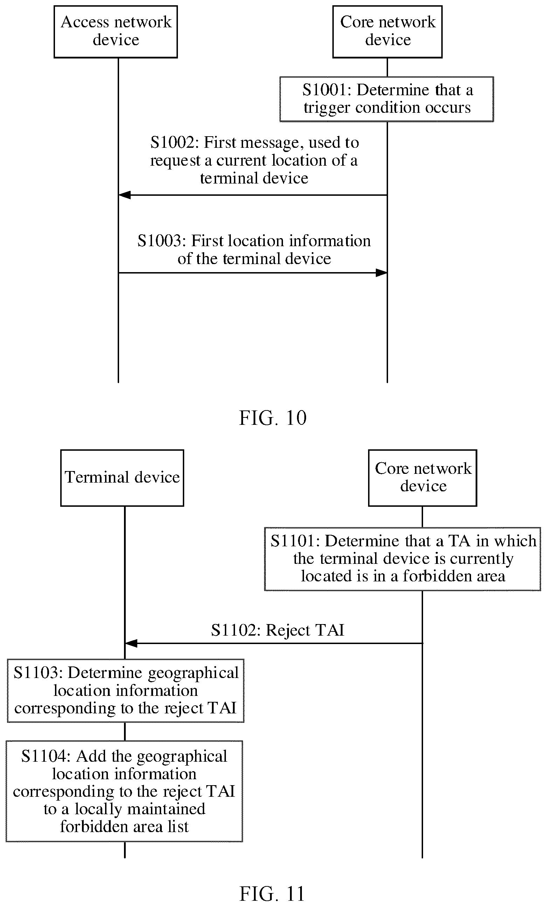

FIG. 10 shows another positioning method according to an embodiment of this application. The positioning method includes the following steps.

S1001: A core network device determines that a trigger condition occurs.

S1002: The core network device sends a first message to an access network device. Correspondingly, the access network device receives the first message from the core network device. The first message is used to request a current location of a terminal device.

For example, the first message in this embodiment of this application may be, for example, a location report request.

S1003: After determining an identifier of a tracking area in which the terminal device is currently located, the access network device sends first location information of the terminal device to the core network device. Correspondingly, the core network device receives the first location information of the terminal device from the access network device, where the first location information includes a first TAI, and the first TAI is the identifier of the tracking area in which the terminal device is currently located.

For the foregoing steps S1001 and S1002, in a possible implementation, that a core network device determines that a trigger condition occurs includes: The core network device determines that received location information of the terminal device includes a plurality of TAIs. For example, in the soft handover scenario shown in FIG. 7, third location information of the terminal device that is sent by the access network device to the core network device may include a plurality of TAIs. After obtaining the third location information of the terminal device, the core network device may learn that location information of the terminal device that is reported by the access network device is inaccurate, and further trigger subscription to the current location of the terminal device from the access network device, to be specific, send, to the access network device, the first message used to request the current location of the terminal device.

For the foregoing steps S1001 and S1002, in another possible implementation, that a core network device determines that a trigger condition occurs includes: The core network device determines that first indication information is received, where the first indication information indicates that location information of the terminal device that is received by the core network device is inaccurate. For example, before AS security between the terminal device and the access network device is established (for example, in an initial registration procedure or an initial service request procedure), the access network device sends second location information of the terminal device and the first indication information to the core network device. The second location information includes a second TAI, and the first indication information indicates that the second location information of the terminal device is inaccurate. After obtaining the first indication information, the core network device may learn that location information of the terminal device that is reported by the access network device is inaccurate, and further trigger subscription to the current location of the terminal device from the access network device, to be specific, send, to the access network device, the first message used to request the current location of the terminal device.

It should be noted that this implementation may be applied to a satellite communication soft handover scenario, or may be applied to a satellite communication hard handover scenario. This is not specifically limited in this embodiment of this application. For example, in the hard handover scenario shown in FIG. 8, the second TAI is a TAI included in location information of the terminal device that is currently obtained by the access network device. Alternatively, for example, in the soft handover scenario shown in FIG. 7, the second TAI is one of a plurality of TAIs included in location information of the terminal device that is currently obtained by the access network device. The TAI may be randomly selected by the access network device from the plurality of TAIs, or may be selected according to a specific rule. This is not specifically limited in this embodiment of this application.

For the foregoing steps S 1001 and S 1002, in still another possible implementation, that a core network device determines that a trigger condition occurs includes: Before AS security between the access network device and the terminal device is established, the core network device determines that third indication information is received, where the third indication information indicates that the terminal device accesses a network or accesses a service through a satellite. For example, the third indication information may be type indication information indicating that a radio access technology type is a satellite. Before the AS security between the terminal device and the access network device is established (for example, in an initial registration procedure or an initial service request procedure), after obtaining the third indication information, the core network device sends, to the access network device, the first message used to request the current location of the terminal device. It may be understood that in this implementation, when determining that the terminal device accesses the network through the satellite, the core network device sends, to the access network device, the first message used to request the current location of the terminal device.

For the foregoing step S1003, after determining the identifier of the tracking area in which the terminal device is currently located, the access network device may report, to the core network device in time, the identifier of the tracking area in which the terminal device is currently located. For related descriptions of how the access network device obtains in time the identifier of the tracking area in which the terminal device is currently located, refer to the embodiment of FIG. 9. Details are not described herein again.

Optionally, the positioning method provided in this embodiment of this application further includes: After determining, based on the first location information of the terminal device, that the terminal device is located in a forbidden area, the core network device sends a reject TAI to the terminal device, or the core network device sends geographical location information corresponding to a reject TAI to the terminal device. Certainly, in this scenario, the core network device may further send a reject cause value to the terminal device. For example, the reject cause value is that the terminal device is currently located in the forbidden area. This is not specifically limited in this embodiment of this application. For specific descriptions of this solution, refer to an embodiment of FIG. 11, FIG. 12, or FIG. 14. Details are not described herein again.

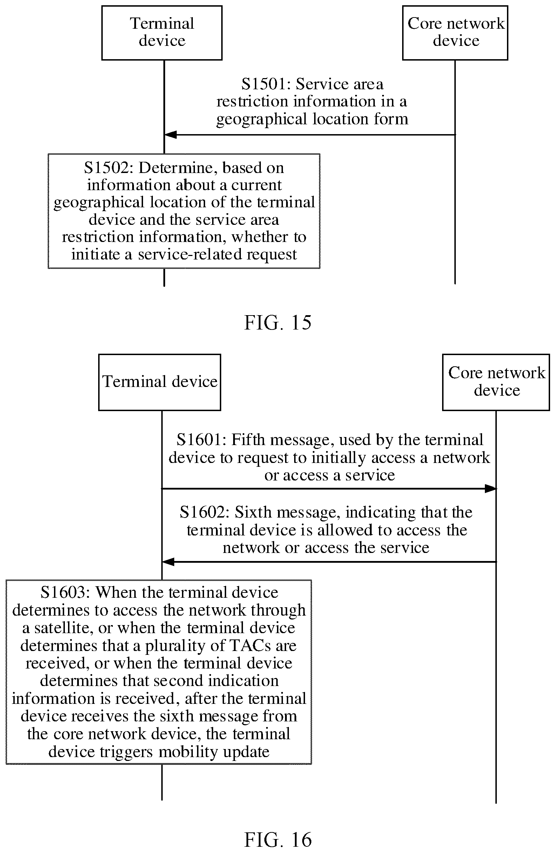

Optionally, the positioning method provided in this embodiment of this application further includes: The core network device sends service area restriction information in a geographical location form and/or local area data network service area information in a geographical location form to the terminal device, so that the terminal device performs an area-related operation in Table 1 on the terminal device based on the service area restriction information in the geographical location form and/or the local area data network service area information in the geographical location form. For specific descriptions of this solution, refer to an embodiment of FIG. 15. Details are not described herein again.

According to the positioning method provided in this embodiment of this application, when determining that the trigger condition occurs, the core network device may subscribe to the current location of the terminal device from the access network device in time, so that after learning of the identifier of the tracking area in which the terminal device is currently located, the access network device immediately reports, to the core network device, the identifier of the tracking area in which the terminal device is currently located. Therefore, the core network device can obtain accurate ULI in time, so that an area-related operation in Table 1 is performed.

Actions of the core network device in the foregoing steps S1001 to S1003 may be performed by the processor 601 in the communication device 600 shown in FIG. 6 by invoking the application program code stored in the memory 603 to instruct the core network device to perform the actions. This is not limited in this embodiment.

In a possible implementation, in the positioning method provided in this embodiment of this application, the terminal device may locally maintain a mapping relationship between a TAI and geographical location information or a mapping relationship between a TAC and geographical location information. The mapping relationship may be locally configured on the terminal device, or may be delivered by a network management system to the terminal device, or may be delivered by the core network device to the terminal device in a registration procedure, a UE configuration update procedure, or the like. This is not specifically limited in this embodiment of this application. An example in which the terminal device locally maintains the mapping relationship between a TAI and geographical location information is used below for description with reference to the following embodiments of FIG. 11 to FIG. 13.

It should be noted that in the embodiments of FIG. 9 and FIG. 10, the access network device determines, based on the accurate geographical location information of the terminal device that is reported by the terminal device, the identifier of the tracking area in which the terminal device is currently located, and further reports, to the core network device, the identifier of the tracking area in which the terminal device is currently located. Certainly, in embodiments of this application, the access network device may alternatively obtain, in another manner, the identifier of the tracking area in which the terminal device is currently located. For example, in a possible implementation, after determining the accurate geographical location information of the terminal device in a positioning manner and determining, based on the locally stored mapping relationship between geographical location information and a TAI, the identifier of the tracking area in which the terminal device is currently located, the core network device sends, to the access network device, the identifier of the tracking area in which the terminal device is currently located. Alternatively, for example, in another possible implementation, after receiving the accurate geographical location information of the terminal device from the terminal device and determining, based on the locally stored mapping relationship between geographical location information and a TAI, the identifier of the tracking area in which the terminal device is currently located, the core network device sends, to the access network device, the identifier of the tracking area in which the terminal device is currently located. Alternatively, for example, in still another possible implementation, after obtaining the accurate geographical location information and determining, based on the locally stored mapping relationship between geographical location information and a TAI, the identifier of the tracking area in which the terminal device is currently located, the terminal device sends, to the core network device, the identifier of the tracking area in which the terminal device is currently located, and the core network device sends, to the access network device, the identifier of the tracking area in which the terminal device is currently located. Alternatively, for example, in still another possible implementation, after obtaining the accurate geographical location information and determining, based on the locally stored mapping relationship between geographical location information and a TAI, the identifier of the tracking area in which the terminal device is currently located, the terminal device sends, to the access network device, the identifier of the tracking area in which the terminal device is currently located. A manner of how the access network device obtains the identifier of the tracking area in which the terminal device is currently located is not specifically limited in embodiments of this application.

FIG. 11 shows another positioning method according to an embodiment of this application. The positioning method includes the following steps.

S1101: A core network device determines, based on an identifier of a tracking area in which a terminal device is currently located, that a TA in which the terminal device is currently located is in a forbidden area.

In a possible implementation, the core network device may obtain, in a subscription procedure of the terminal device, a forbidden area TAI list corresponding to the terminal device, where the forbidden area TAI list includes TAIs of one or more areas that the terminal device is forbidden to access. After obtaining the identifier of the tracking area in which the terminal device is currently located, if determining that the identifier of the tracking area in which the terminal device is currently located is in the forbidden area TAI list corresponding to the terminal device, the core network device determines that the TA in which the terminal device is currently located is in the forbidden area. Otherwise, the core network device determines that the TA in which the terminal device is currently located is in a non-forbidden area.

S1102: The core network device sends a reject TAI to the terminal device. Correspondingly, the terminal device receives the reject TAI from the core network device.

Certainly, in this scenario, the core network device may further send a reject cause value to the terminal device. For example, the reject cause value is that the terminal device is currently located in the forbidden area. This is not specifically limited in this embodiment of this application.

For example, the core network device may include the reject TAI in a deregistration message sent to the terminal device. This is not specifically limited in this embodiment of this application.

S1103: The terminal device determines, based on a locally maintained mapping relationship between a TAI and geographical location information, geographical location information corresponding to the reject TAI.

In other words, in this embodiment of this application, the terminal device maintains the mapping relationship between a TAI and geographical location information. After obtaining the reject TAI, the terminal device may perform conversion from a TAI form to a geographical location information form based on the mapping relationship.

For example, the geographical location information is formed by longitude+latitude, and the mapping relationship between a TAI and geographical location information may be shown in Table 2.

**Table 2**

| TAI | Geographical location information |
|---|---|
| TAI 1 | (Longitude 1+latitude 1, longitude 2+latitude 2) |
| TAI 2 | (Longitude 3+latitude 3, longitude 4+latitude 4) |
| TAI 3 | (Longitude 5+latitude 5, longitude 6+latitude 6) |
| ... | |

S 1104: The terminal device adds the geographical location information corresponding to the reject TAI to a locally maintained forbidden area list.

In other words, in this embodiment of this application, the forbidden area list maintained by the terminal device exists in the geographical location information form.

Optionally, the positioning method provided in this embodiment of this application further includes: The terminal device determines, based on information about a current geographical location of the terminal device and the locally maintained forbidden area list, whether to initiate a signaling procedure. The signaling procedure may be, for example, a registration procedure.

In a possible implementation, that the terminal device determines, based on information about a current geographical location of the terminal device and the locally maintained forbidden area list, whether to initiate a signaling procedure includes: When the information about the current geographical location of the terminal device is in the forbidden area list, the terminal device determines that initiation of the signaling procedure is not allowed. In this way, signaling consumption caused by a final procedure failure due to blind initiation of the signaling procedure by the terminal device can be avoided, and therefore signaling consumption of the terminal device can be reduced. For example, subsequently, when the terminal device moves to an area of the location again, the terminal device may determine, by checking the locally maintained forbidden area list, that the terminal device is in the forbidden area, and then the terminal device is restricted from initiating the registration procedure. This can avoid signaling consumption caused by a final registration failure due to direct initiation of the registration procedure by the terminal device.

In another possible implementation, that the terminal device determines, based on information about a current geographical location of the terminal device and the locally maintained forbidden area list, whether to initiate a signaling procedure includes: When the information about the current geographical location of the terminal device is in the forbidden area list, the terminal device determines that initiation of the signaling procedure is allowed again after the terminal device moves for preset time and/or a preset distance. In this way, signaling consumption caused by a final procedure failure due to blind initiation of the signaling procedure by the terminal device can be avoided, and therefore signaling consumption of the terminal device can be reduced. In addition, this solution is simple and easy to implement, and helps the terminal device access a network in time. For example, after moving for the preset time and/or the preset distance, the terminal device may have moved out of a range of the forbidden area corresponding to the terminal device. In this case, the terminal device initiates the signaling procedure again, and may access the network in time. Certainly, the terminal device may not successfully initiate the signaling procedure again after moving for the preset time and/or the preset distance. In this case, the terminal device may receive a reject TAI sent by the core network device, and repeatedly perform the procedure in FIG. 11, to continuously improve the locally maintained forbidden area list. This is not specifically limited in this embodiment of this application.

According to the positioning method provided in this embodiment of this application, because the terminal device may locally maintain the mapping relationship between a TAI and geographical location information, after receiving the reject TAI sent by the core network device, the terminal device may determine, based on the locally maintained mapping relationship between a TAI and geographical location information, the geographical location information corresponding to the reject TAI, and further add the geographical location information corresponding to the reject TAI to the locally maintained forbidden area list. In other words, in this embodiment of this application, the forbidden area list locally maintained by the terminal device may exist in the geographical location information form. Further, after obtaining the information about the current geographical location of the terminal device, the terminal device may directly perform lookup in the locally maintained forbidden area list to determine whether to initiate the signaling procedure. In this way, the signaling consumption caused by the final procedure failure due to the blind initiation of the signaling procedure by the terminal device can be avoided, and therefore the signaling consumption of the terminal device can be reduced.

Actions of the terminal device in the foregoing steps S1101 to S1104 may be performed by the processor 601 in the communication device 600 shown in FIG. 6 by invoking the application program code stored in the memory 603 to instruct the terminal device to perform the actions. This is not limited in this embodiment.

In an alternative solution, in the embodiment of FIG. 11, after determining, based on the identifier of the tracking area in which the terminal device is currently located, that the TA in which the terminal device is currently located is in the forbidden area, the core network device may not send the reject TAI to the terminal device, but send a reject cause value to the terminal device. For example, the reject cause value is that the terminal device is currently located in the forbidden area, or the reject cause value indicates the terminal device to add information about a tracking area corresponding to the current geographical location of the terminal device to the local forbidden area list. After receiving the reject cause value, the terminal device may add, to the locally maintained forbidden area list based on the locally maintained mapping relationship between a TAI and geographical location information, one or more pieces of geographical location information corresponding to a TAI corresponding to the current geographical location of the terminal device. For other related descriptions, refer to the embodiment of FIG. 11. Details are not described herein again.

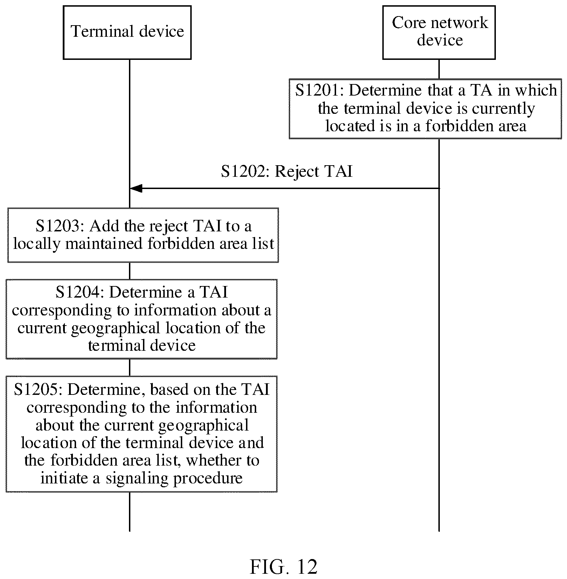

The embodiment of FIG. 11 is described by using an example in which the terminal device locally maintains the mapping relationship between a TAI and geographical location information and the forbidden area list maintained by the terminal device exists in the geographical location information form. Optionally, when the terminal device locally maintains the mapping relationship between a TAI and geographical location information, the forbidden area list maintained by the terminal device may alternatively exist in the TAI form. Specifically, FIG. 12 shows another positioning method according to an embodiment of this application. The positioning method includes the following steps.

S1201: A core network device determines, based on an identifier of a tracking area in which a terminal device is currently located, that a TA in which the terminal device is currently located is in a forbidden area.

S1202: The core network device sends a reject TAI to the terminal device. Correspondingly, the terminal device receives the reject TAI from the core network device.

For related descriptions of steps S1201 and S1202, refer to steps S1101 and S1102 in the embodiment of FIG. 11. Details are not described herein again.

S1203: The terminal device adds the reject TAI to a locally maintained forbidden area list.

In other words, in this embodiment of this application, the forbidden area list maintained by the terminal device exists in a TAI form. After obtaining the TAI, the terminal device may directly add the reject TAI to the locally maintained forbidden area list.

S1204: After obtaining information about a current geographical location of the terminal device, the terminal device determines, based on a locally maintained mapping relationship between a TAI and geographical location information, a TAI corresponding to the information about the current geographical location of the terminal device.

In other words, in this embodiment of this application, the terminal device maintains the mapping relationship between a TAI and geographical location information. For related descriptions of the mapping relationship, refer to the descriptions of step S1103 in the embodiment of FIG. 11. Details are not described herein again.

Because the forbidden area list in this embodiment of this application exists in the TAI form, after obtaining the information about the current geographical location of the terminal device, the terminal device may perform conversion from a geographical location information form to the TAI form based on the mapping relationship.

S1205: The terminal device determines, based on the TAI corresponding to the information about the current geographical location of the terminal device and the forbidden area list, whether to initiate a signaling procedure.

In a possible implementation, that the terminal device determines, based on the TAI corresponding to the information about the current geographical location of the terminal device and the locally maintained forbidden area list, whether to initiate a signaling procedure includes: When the TAI corresponding to the information about the current geographical location of the terminal device is in the forbidden area list, the terminal device determines that initiation of the signaling procedure is not allowed.

In another possible implementation, that the terminal device determines, based on the TAI corresponding to the information about the current geographical location of the terminal device and the locally maintained forbidden area list, whether to initiate a signaling procedure includes: When the TAI corresponding to the information about the current geographical location of the terminal device is in the forbidden area list, the terminal device determines that initiation of the signaling procedure is allowed again after the terminal device moves for preset time and/or a preset distance.

For related descriptions of step S1205, refer to the embodiment of FIG. 11. For example, a difference is as follows: In this embodiment of this application, when the TAI corresponding to the information about the current geographical location of the terminal device is in the forbidden area list, the terminal device determines whether to initiate the signaling procedure. In the embodiment of FIG. 11, when the information about the current geographical location of the terminal device is in the forbidden area list, the terminal device determines whether to initiate the signaling procedure. Details are not described herein again.

According to the positioning method provided in this embodiment of this application, in an aspect, in this embodiment of this application, the forbidden area list locally maintained by the terminal device exists in the TAI form. Therefore, after receiving the reject TAI from the core network device, the terminal device may add the reject TAI to the locally maintained forbidden area list. In this way, implementation is simple. In another aspect, in this embodiment of this application, the terminal device may locally maintain the mapping relationship between a TAI and geographical location information. Therefore, after obtaining the information about the current geographical location of the terminal device, the terminal device may determine, based on the locally maintained mapping relationship between a TAI and geographical location information, the TAI corresponding to the information about the current geographical location of the terminal device, so that the terminal device may perform lookup in the locally maintained forbidden area list to determine whether to initiate the signaling procedure. In this way, signaling consumption caused by a final procedure failure due to blind initiation of the signaling procedure by the terminal device can be avoided, and therefore signaling consumption of the terminal device can be reduced.

Actions of the terminal device in the foregoing steps S 1201 to S 1205 may be performed by the processor 601 in the communication device 600 shown in FIG. 6 by invoking the application program code stored in the memory 603 to instruct the terminal device to perform the actions. This is not limited in this embodiment.

In an alternative solution, in the embodiment of FIG. 12, after determining, based on the identifier of the tracking area in which the terminal device is currently located, that the TA in which the terminal device is currently located is in the forbidden area, the core network device may not send the reject TAI to the terminal device, but send a reject cause value to the terminal device. For example, the reject cause value is that the terminal device is currently located in the forbidden area, or the reject cause value indicates the terminal device to add information about a tracking area corresponding to the current geographical location of the terminal device to the local forbidden area list. After receiving the reject cause value, the terminal device may add, to the locally maintained forbidden area list based on the locally maintained mapping relationship between a TAI and geographical location information, a TAI corresponding to the current geographical location of the terminal device. For other related descriptions, refer to the embodiment of FIG. 12. Details are not described herein again.

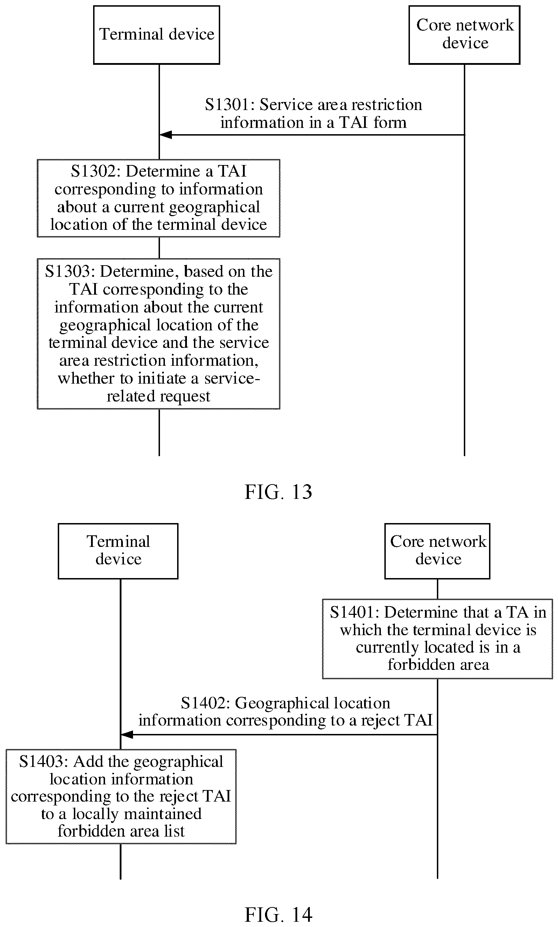

The embodiments of FIG. 11 and FIG. 12 are both described by using an example of a related operation of the forbidden area list that is performed when the terminal device locally maintains the mapping relationship between a TAI and geographical location information. Certainly, when the terminal device locally maintains the mapping relationship between a TAI and geographical location information, a related operation may alternatively be performed on service area restriction information and/or LADN service area information of the terminal device. The following uses a related operation of the service area restriction information as an example for description. FIG. 13 shows another positioning method according to an embodiment of this application. The positioning method includes the following steps.

S1301: A core network device sends service area restriction information in a TAI form to a terminal device. Correspondingly, the terminal device receives the service area restriction information in the TAI form from the core network device.

In this embodiment of this application, the service area restriction information in the TAI form may be understood as service area restriction information represented in a TAI manner. For related descriptions of the service area restriction information, refer to Table 1. Details are not described herein again.

For example, the core network device may add the service area restriction information in the TAI form to a registration accept message or a service accept message sent to the terminal device. This is not specifically limited in this embodiment of this application.

S1302: The terminal device determines, based on a locally maintained mapping relationship between a TAI and geographical location information, a TAI corresponding to information about a current geographical location of the terminal device.

For related descriptions of step S1302, refer to step S1103 in the embodiment of FIG. 11. Details are not described herein again.

S1303: The terminal device determines, based on the TAI corresponding to the information about the current geographical location of the terminal device and the service area restriction information, whether to initiate a service-related request.

In a possible implementation, that the terminal device determines, based on the TAI corresponding to the information about the current geographical location of the terminal device and the service area restriction information, whether to initiate a service-related request includes: When the service area restriction information includes service allowed area information, if the TAI corresponding to the information about the current geographical location of the terminal device is not in the service area restriction information, the terminal device determines that initiation of the service-related request is not allowed. In this way, signaling consumption caused by a final service request failure due to blind initiation of the service-related request by the terminal device can be avoided, and therefore signaling consumption of the terminal device can be reduced. For example, subsequently, when the terminal device moves to an area of the location again, the terminal device may determine, by checking the service area restriction information, that the initiation of the service-related request is not allowed, and then the terminal device is restricted from initiating the service-related request. For example, the terminal device is restricted from using common data services (except an emergency call and a high-priority service). In this way, signaling consumption caused by a final service request failure due to direct initiation of the service-related request by the terminal device can be avoided.

In another possible implementation, that the terminal device determines, based on the TAI corresponding to the information about the current geographical location of the terminal device and the service area restriction information, whether to initiate a service-related request includes: When the service area restriction information includes service allowed area information, if the TAI corresponding to the information about the current geographical location of the terminal device is not in the service area restriction information, the terminal device determines that initiation of the service-related request is allowed again after the terminal device moves for preset time and/or a preset distance. In this way, signaling consumption caused by a final service request failure due to blind initiation of the service-related request by the terminal device can be avoided, and therefore signaling consumption of the terminal device can be reduced. In addition, this solution is simple and easy to implement, and helps the terminal device access a service in time. For example, after moving for the preset time and/or the preset distance, the terminal device may have moved into a service allowed area of the terminal device. In this case, the terminal device initiates the service-related request again, and may access the service in time. Certainly, the terminal device may not necessarily move into the service allowed area of the terminal device after moving for the preset time and/or the preset distance. In this case, before initiating the service-related request, the terminal device still needs to determine, based on the TAI corresponding to the information about the current geographical location of the terminal device and the service area restriction information, whether to initiate the service-related request. The rest may be deduced by analogy. Details are not described herein again.

In still another possible implementation, that the terminal device determines, based on the TAI corresponding to the information about the current geographical location of the terminal device and the service area restriction information, whether to initiate a service-related request includes: When the service area restriction information includes service non-allowed area information, if the TAI corresponding to the information about the current geographical location of the terminal device is in the service area restriction information, the terminal device determines that initiation of the service-related request is not allowed. For a related example and effect, refer to the first implementation. Details are not described herein again.

In still another possible implementation, that the terminal device determines, based on the TAI corresponding to the information about the current geographical location of the terminal device and the service area restriction information, whether to initiate a service-related request includes: When the service area restriction information includes service non-allowed area information, if the TAI corresponding to the information about the current geographical location of the terminal device is in the service area restriction information, the terminal device determines that initiation of the service-related request is allowed again after the terminal device moves for preset time and/or a preset distance. For a related example and effect, refer to the second implementation. Details are not described herein again.

According to the positioning method provided in this embodiment of this application, in this embodiment of this application, the terminal device may locally maintain the mapping relationship between a TAI and geographical location information. Therefore, after obtaining the information about the current geographical location of the terminal device, the terminal device may determine, based on the locally maintained mapping relationship between a TAI and geographical location information, the TAI corresponding to the information about the current geographical location of the terminal device. Further, the terminal device may determine, based on the service area restriction information in the TAI form, whether to initiate the service-related request. In this way, the signaling consumption caused by the final service request failure due to the blind initiation of the service-related request by the terminal device can be avoided, and therefore the signaling consumption of the terminal device can be reduced.

Actions of the terminal device in the foregoing steps S1301 to S1303 may be performed by the processor 601 in the communication device 600 shown in FIG. 6 by invoking the application program code stored in the memory 603 to instruct the terminal device to perform the actions. This is not limited in this embodiment.

It should be noted that the embodiment of FIG. 13 is described by using the related operation of the service area restriction information as an example. Certainly, for other area information, reference may also be made to solution execution of the embodiment of FIG. 13. For example, for the LADN service area information, the core network device sends LADN service area information in a TAI form to the terminal device. After receiving the LADN service area information in the TAI form from the core network device, the terminal device determines, based on a locally maintained mapping relationship between a TAI and geographical location information, a TAI corresponding to information about a current geographical location of the terminal device. Further, the terminal device determines, based on the TAI corresponding to the information about the current geographical location of the terminal device and the LADN service area information, whether access to an LADN network is allowed. Details are not described again in this embodiment of this application.

It should be noted that the embodiments of FIG. 11 to FIG. 13 are all described by using an example in which the terminal device locally maintains the mapping relationship between a TAI and geographical location information. In an alternative solution, the terminal device may locally maintain a mapping relationship between a TAC and geographical location information. In this way, similar to the embodiment of FIG. 11, after receiving the reject TAI from the core network device, the terminal device needs to determine a TAC corresponding to the reject TAI, so that the terminal device may determine, based on the locally maintained mapping relationship between a TAC and geographical location information, geographical location information corresponding to the TAC corresponding to the reject TAI. Then, the terminal device adds the geographical location information corresponding to the TAC corresponding to the reject TAI to the locally maintained forbidden area list. Alternatively, similar to the embodiment of FIG. 12, after receiving the reject TAI from the core network device, the terminal device adds the reject TAI to the locally maintained forbidden area list. Further, after obtaining the information about the current geographical location of the terminal device, the terminal device may determine, based on the locally maintained mapping relationship between a TAC and geographical location information, a TAC corresponding to the information about the current geographical location of the terminal device, and further determine, based on the TAC corresponding to the information about the current geographical location of the terminal device and the forbidden area list, whether to initiate the signaling procedure. Alternatively, similar to the embodiment of FIG. 13, after determining, based on the locally maintained mapping relationship between a TAC and geographical location information, a TAC corresponding to the information about the current geographical location of the terminal device, the terminal device determines, based on the TAC corresponding to the information about the current geographical location of the terminal device and the service area restriction information, whether to initiate the service-related request. For other related descriptions, refer to the embodiments of FIG. 11 to FIG. 13. Details are not described herein again.

It should be noted that the forbidden area list locally maintained by the terminal device may alternatively be in a TAC form. This is not specifically limited in embodiments of this application.

In a possible implementation, in the positioning method provided in embodiments of this application, the core network device may convert area information in the TAI form into area information in a geographical location form, and send the area information in the geographical location form to the terminal device. The following provides descriptions with reference to the following embodiments of FIG. 14 and FIG. 15.

FIG. 14 shows another positioning method according to an embodiment of this application. The positioning method includes the following steps.

S1401: A core network device determines, based on an identifier of a tracking area in which a terminal device is currently located, that a TA in which the terminal device is currently located is in a forbidden area.

For related descriptions of step S1401, refer to step S1101 in the embodiment of FIG. 11. Details are not described herein again.

S1402: The core network device sends geographical location information corresponding to a reject TAI to the terminal device. Correspondingly, the terminal device receives the geographical location information corresponding to the reject TAI from the core network device.

In other words, in this embodiment of this application, after determining that the TA in which the terminal device is currently located is in the forbidden area, the core network device may determine, based on a locally stored mapping relationship between a TAI and geographical location information, the geographical location information corresponding to the reject TAI, and send the geographical location information corresponding to the reject TAI to the terminal device.

S1403: The terminal device adds the geographical location information corresponding to the reject TAI to a locally maintained forbidden area list.

In other words, in this embodiment of this application, the forbidden area list maintained by the terminal device exists in a geographical location information form.

Optionally, the positioning method provided in this embodiment of this application further includes: The terminal device determines, based on information about a current geographical location of the terminal device and the locally maintained forbidden area list, whether to initiate a signaling procedure. For a related implementation, refer to the embodiment of FIG. 11. Details are not described herein again.

According to the positioning method provided in this embodiment of this application, because the core network device may perform conversion between a TAI form and the geographical location information form, the terminal device may receive the geographical location information corresponding to the reject TAI from the core network device, and further add the geographical location information corresponding to the reject TAI to the locally maintained forbidden area list. In other words, in this embodiment of this application, the forbidden area list locally maintained by the terminal device may exist in the geographical location information form. Further, after obtaining the information about the current geographical location of the terminal device, the terminal device may directly perform lookup in the locally maintained forbidden area list to determine whether to initiate the signaling procedure. In this way, signaling consumption caused by a final procedure failure due to blind initiation of the signaling procedure by the terminal device can be avoided, and therefore signaling consumption of the terminal device can be reduced.

Actions of the terminal device in the foregoing steps S1401 to S1403 may be performed by the processor 601 in the communication device 600 shown in FIG. 6 by invoking the application program code stored in the memory 603 to instruct the terminal device to perform the actions. This is not limited in this embodiment.

The embodiment of FIG. 14 is described by using a related operation of the forbidden area list as an example. Certainly, when the core network device may convert the area information in the TAI form into the area information in the geographical location form, a related operation may alternatively be performed on service area restriction information and/or LADN service area information of the terminal device. The following uses a related operation of the service area restriction information as an example for description. FIG. 15 shows another positioning method according to an embodiment of this application. The positioning method includes the following steps.

S1501: A core network device sends service area restriction information in a geographical location form to a terminal device. Correspondingly, the terminal device receives the service area restriction information in the geographical location form from the core network device.

In this embodiment of this application, the service area restriction information in the geographical location form may be understood as service area restriction information represented by geographical location information. For related descriptions of the service area restriction information, refer to Table 1. Details are not described herein again.

For example, the core network device may add the service area restriction information in the geographical location form to a registration accept message or a service accept message sent to the terminal device. This is not specifically limited in this embodiment of this application.

S1502: The terminal device determines, based on information about a current geographical location of the terminal device and the service area restriction information, whether to initiate a service-related request.

In a possible implementation, that the terminal device determines, based on information about a current geographical location of the terminal device and the service area restriction information, whether to initiate a service-related request includes: When the service area restriction information includes service allowed area information, if the information about the current geographical location of the terminal device is not in the service area restriction information, the terminal device determines that initiation of the service-related request is not allowed.

In another possible implementation, that the terminal device determines, based on information about a current geographical location of the terminal device and the service area restriction information, whether to initiate a service-related request includes: When the service area restriction information includes service allowed area information, if the information about the current geographical location of the terminal device is not in the service area restriction information, the terminal device determines that initiation of the service-related request is allowed again after the terminal device moves for preset time and/or a preset distance.

In still another possible implementation, that the terminal device determines, based on information about a current geographical location of the terminal device and the service area restriction information, whether to initiate a service-related request includes: When the service area restriction information includes service non-allowed area information, if the information about the current geographical location of the terminal device is in the service area restriction information, the terminal device determines that initiation of the service-related request is not allowed.

In yet another possible implementation, that the terminal device determines, based on information about a current geographical location of the terminal device and the service area restriction information, whether to initiate a service-related request includes: When the service area restriction information includes service non-allowed area information, if the information about the current geographical location of the terminal device is in the service area restriction information, the terminal device determines that initiation of the service-related request is allowed again after the terminal device moves for preset time and/or a preset distance.

For a related example and effect of step S1502, refer to step S1302 in the embodiment of FIG. 13. For example, a difference lies in that the service area restriction information in this embodiment of this application is in the geographical location form, and the service area restriction information in the embodiment of FIG. 13 is in the TAI form. Details are not described herein again.

According to the positioning method provided in this embodiment of this application, because the core network device may perform conversion between the TAI form and a geographical location information form in this embodiment of this application, the terminal device may receive the service area restriction information in the geographical location form from the core network device, so that after obtaining the information about the current geographical location of the terminal device, the terminal device may directly determine, based on the service area restriction information in the geographical location form, whether to initiate the service-related request. In this way, signaling consumption caused by a final service request failure due to blind initiation of the service-related request by the terminal device can be avoided, and therefore signaling consumption of the terminal device can be reduced.

Actions of the terminal device in the foregoing steps S1501 and S1502 may be performed by the processor 601 in the communication device 600 shown in FIG. 6 by invoking the application program code stored in the memory 603 to instruct the terminal device to perform the actions. This is not limited in this embodiment.

It should be noted that the embodiment of FIG. 15 is described by using the related operation of the service area restriction information as an example. Certainly, for other area information, reference may also be made to solution execution of the embodiment of FIG. 15. For example, for the LADN service area information, the core network device sends LADN service area information in a geographical location form to the terminal device. After receiving the LADN service area information in the geographical location form from the core network device, the terminal device determines, based on information about a current geographical location of the terminal device and the LADN service area information, whether access to an LADN network is allowed. Details are not described again in this embodiment of this application.

FIG. 16 shows another positioning method according to an embodiment of this application. The positioning method is described by using an example in which a terminal device triggers a mobility update procedure, and includes the following steps.

S1601: The terminal device sends a fifth message to a core network device. Correspondingly, the core network device receives the fifth message from the terminal device. The fifth message is used by the terminal device to request to initially access a network or access a service.

For example, the fifth message in this embodiment of this application may be, for example, a registration request or a service request, where the registration request is used to request to initially access the network, and the service request is used to request to access the service.

S1602: The core network device sends a sixth message to the terminal device. Correspondingly, the terminal device receives the sixth message from the core network device. The sixth message indicates that the terminal device is allowed to access the network or access the service.

In this embodiment of this application, after receiving the fifth message, the core network device sends the sixth message to the terminal device if determining to allow the terminal device to access the network or access the service.

For example, if the fifth message is the registration request, the sixth message may be a registration accept message. Alternatively, if the fifth message is the service request, the sixth message may be a service accept message.

In a possible implementation, the core network device may determine, based on a plurality of TAIs in received geographical location information of the terminal device, to allow the terminal device to access the network or access the service.

In another possible implementation, the core network device may determine, based on received first indication information, to allow the terminal device to access the network or access the service. The first indication information indicates that location information of the terminal device that is received by the core network device is inaccurate.

In still another possible implementation, the core network device may determine, based on received third indication information, to allow the terminal device to access the network or access the service. The third indication information indicates that the terminal device accesses the network or accesses the service through a satellite. For related descriptions of the third indication information, refer to the embodiment of FIG. 10. Details are not described herein again.

How the core network device determines whether to allow the terminal device to access the network or access the service is not specifically limited in this embodiment of this application.

S 1603: When the terminal device determines to access the network through a satellite, or when the terminal device determines that a plurality of TACs are received, or when the terminal device determines that second indication information is received, after receiving the sixth message from the core network device, the terminal device triggers mobility update, where the second indication information indicates that a TAC included in a satellite broadcast message is inaccurate.

For example, in this embodiment of this application, in the soft handover scenario shown in FIG. 7, the terminal device may receive the satellite broadcast message from an access network device, where the satellite broadcast message includes a plurality of TACs. The terminal device triggers mobility update based on the plurality of TACs. Alternatively, in the soft handover scenario shown in FIG. 7, the terminal device receives the sixth message from the core network device, where the sixth message includes a plurality of TAIs or fourth indication information. The terminal device triggers mobility update based on the plurality of TAIs or the fourth indication information, where the fourth indication information indicates that location information of the terminal device is inaccurate.

Alternatively, for example, in this embodiment of this application, in the hard handover scenario shown in FIG. 8, the terminal device may receive the satellite broadcast message from an access network device, where the satellite broadcast message includes one TAC and the second indication information, and the second indication information indicates that the TAC included in the satellite broadcast message is inaccurate (or may be understood as that the TAC cannot represent a current location of the terminal device). The terminal device triggers mobility update based on the second indication information. Alternatively, in the hard handover scenario shown in FIG. 8, the terminal device receives the sixth message from the core network device, where the sixth message includes fourth indication information. The terminal device triggers mobility update based on the fourth indication information, where the fourth indication information indicates that location information of the terminal device is inaccurate.

According to the positioning method provided in this embodiment of this application, the terminal device may trigger the mobility update procedure in time, and report accurate geographical location information of the terminal device to the access network device in the mobility update procedure. Further, after identifying the mobility update procedure and determining, based on the accurate geographical location information of the terminal device, an identifier of a tracking area in which the terminal device is currently located, the access network device reports, to the core network device in time, the identifier of the tracking area in which the terminal device is currently located, so that the core network device obtains accurate ULI in time, and therefore an area-related operation in Table 1 can be performed.

Actions of the access network device in the foregoing steps S1601 to S1603 may be performed by the processor 601 in the communication device 600 shown in FIG. 6 by invoking the application program code stored in the memory 603 to instruct the access network device to perform the actions. This is not limited in this embodiment.

It should be noted that the embodiments of FIG. 9 to FIG. 16 may be independently implemented, or a plurality of embodiments in the embodiments of FIG. 9 to FIG. 16 may be implemented in combination. This is not specifically limited in embodiments of this application. For example, after steps S1001 to S1003 in the embodiment of FIG. 10 are performed, if the core network device determines, based on the first location information of the terminal device, that the terminal device is located in the forbidden area, operations may be performed with reference to the embodiment of FIG. 11, FIG. 12, or FIG. 14 or with reference to another manner. This is not specifically limited in embodiments of this application.

With reference to a 5G mobile communication system, the following describes in detail, by using specific examples, the positioning method provided in embodiments of this application by using an example in which a core network device is an AMF and an access network device is an NR-RAN device.

It should be noted that names of messages between entities or modules, names of parameters in the messages, or the like in the following embodiments of this application are merely examples, and may be other names during specific implementation. This is not specifically limited in embodiments of this application.

For example, based on the embodiments of FIG. 9 to FIG. 16, FIG. 17 shows a positioning method in the 5G mobile communication system according to an embodiment of this application. The method includes the following steps.

S1701: A terminal device sends an access network (access network, AN) message 1 (AN message 1) to an NR-RAN device. Correspondingly, the NR-RAN device receives the AN message 1 from the terminal device.

The AN message 1 includes an AN parameter 1 and a non-access stratum (non-access stratum, NAS) message 1 (NAS message 1). The NAS message 1 includes a registration request or a service request. The registration request is used to request to initially access a network, and the service request is used to request to access a service.

Optionally, in this embodiment of this application, because AS security between the terminal device and the NR-RAN device is not established, the AN parameter 1 may include coarse-grained geographical location information of the terminal device. For details, refer to the conventional technology. Details are not described herein again.

It should be noted that a registration request before the AS security between the terminal device and the NR-RAN device is established may be understood as an initial registration request, and a registration request after the AS security between the terminal device and the NR-RAN device is established may be understood as being used for mobility update, both of which may be specifically represented by registration types in NAS messages. When a registration type is initial registration, it indicates that the terminal device initiates an initial registration request. When a registration type is mobility registration, it indicates that the terminal device initiates mobility update registration. This is uniformly described herein, and details are not described again below.

S1702: The NR-RAN device determines that a tracking area in which the terminal device is currently located cannot be identified.

In this embodiment of this application, after determining that the tracking area in which the terminal device is currently located cannot be identified, the NR-RAN device may trigger an implicit subscription mechanism. To be specific, after determining that the tracking area in which the terminal device is currently located can be sensed, the NR-RAN device immediately reports, to a core network device, an identifier of the tracking area in which the terminal device is currently located.

For a specific implementation in which the NR-RAN device determines that the tracking area in which the terminal device is currently located cannot be identified, refer to the embodiment of FIG. 9. Details are not described herein again. It may be understood that that the NR-RAN device determines that the tracking area in which the terminal device is currently located cannot be identified may also be described as that the NR-RAN device determines that the tracking area in which the terminal device is currently located cannot be determined, in other words, a tracking area corresponding to a current location of the terminal device cannot be determined.

S1703: The NR-RAN device sends an N2 message 1 (N2 message 1) to an AMF. Correspondingly, the AMF receives the N2 message 1 from the NR-RAN device.

The N2 message 1 includes location information (UE location information, ULI) of the terminal device and an N1 session management (session management, SM) container (container). The N1 SM container includes the NAS message 1 in step S1701.

In the soft handover scenario shown in FIG. 7:
In a possible implementation, the ULI includes a plurality of TAIs.

In another possible implementation, the ULI includes a second TAI, and the second TAI is one of a plurality of TAIs included in location information of the terminal device that is currently obtained by the NR-RAN device. The TAI may be randomly selected by the NR-RAN device from the plurality of TAIs, or may be selected according to a specific rule. This is not specifically limited in this embodiment of this application. In this scenario, optionally, the N2 message 1 further includes first indication information, and the first indication information indicates that the ULI in the N2 message 1 is inaccurate.

In the hard handover scenario shown in FIG. 8, the ULI includes one TAI (which may also correspond to the second TAI in the embodiment of FIG. 9). In this scenario, optionally, the N2 message 1 further includes first indication information, and the first indication information indicates that the ULI in the N2 message 1 is inaccurate.

S1704: The AMF determines to allow the terminal device to access the network or access the service.

For a specific implementation in which the AMF determines to allow the terminal device to access the network or access the service, refer to step S1602 in the embodiment of FIG. 16. Details are not described herein again.

S1705: The AMF sends an N2 message 2 to the NR-RAN device. Correspondingly, the NR-RAN device receives the N2 message 2 from the AMF.

The N2 message 2 includes mobility restriction (mobility restriction) information 1. The mobility restriction information 1 includes a forbidden area list corresponding to the terminal device and service area restriction information. After obtaining the mobility restriction information 1, the NR-RAN device may perform an area-related operation. For details, refer to Table 1. Details are not described herein again.

In addition, if the NAS message in step S1701 includes the registration request, the N2 message 2 further includes a registration accept message. Alternatively, if the NAS message in step S1701 includes the service request, the N2 message 2 further includes a service accept message.

The registration accept message or the service accept message includes an identifier of the terminal device, and the identifier of the terminal device may be, for example, a 5G globally unique temporary UE identity (globally unique temporary UE identity, GUTI).

In a possible implementation, the registration accept message or the service accept message further includes mobility restriction information 2. The mobility restriction information 2 includes service area restriction information and/or LADN service area information. The mobility restriction information 2 may be in a TAI form, or may be in a geographical location information form. For a specific implementation, refer to the embodiments of FIG. 13 and FIG. 15. Details are not described herein again.

S 1706: The NR-RAN device sends the registration accept message or the service accept message to the terminal device. Correspondingly, the terminal device receives the registration accept message or the service accept message from the NR-RAN device.

In this embodiment of this application, after receiving the registration accept message or the service accept message from the NR-RAN device, the terminal device may learn that the AS security between the terminal device and the NR-RAN device is established.

In this embodiment of this application, after obtaining the mobility restriction information 2, the terminal device may perform an area-related operation. For a specific implementation, refer to the embodiments of FIG. 13 and FIG. 15. Details are not described herein again.

Further, the positioning method provided in this embodiment of this application includes the following steps.

S1707: The terminal device sends accurate geographical location information of the terminal device to the NR-RAN device. Correspondingly, the NR-RAN device receives the accurate geographical location information of the terminal device.

In a possible implementation, the accurate geographical location information of the terminal device may be actively (for example, periodically) reported by the terminal device to the NR-RAN device after the terminal device learns that the AS security between the terminal device and the NR-RAN device is established.

In another possible implementation, the NR-RAN device may be triggered to subscribe to the current location of the terminal device from the terminal device after determining that the tracking area in which the terminal device is currently located cannot be identified. Further, after learning that the AS security between the terminal device and the NR-RAN device is established, the terminal device immediately sends the accurate geographical location information of the terminal device to the NR-RAN device.

In this embodiment of this application, when the terminal device sends the accurate geographical location information of the terminal device to the NR-RAN device is not specifically limited.

S 1708: After determining that a trigger condition occurs and determining a first TAI based on the accurate geographical location information of the terminal device, the NR-RAN device sends first location information of the terminal device to the AMF. Correspondingly, the AMF receives the first location information of the terminal device from the NR-RAN device. The first location information includes the first TAI, and the first TAI is the identifier of the tracking area in which the terminal device is currently located.

In this case, the AMF may learn of the accurate location information of the terminal device.

In a possible implementation, the positioning method provided in this embodiment of this application further includes: The AMF determines, based on the first TAI, that a TA in which the terminal device is currently located is in a forbidden area, and further sends, to the terminal device, a reject TAI or geographical location information corresponding to the reject TAI, so that the terminal device updates a locally maintained forbidden area list based on the reject TAI or the geographical location information corresponding to the reject TAI. For a related implementation, refer to the embodiments of FIG. 11, FIG. 12, and FIG. 14. Details are not described herein again.

According to the positioning method provided in this embodiment of this application, after determining that the tracking area in which the terminal device is currently located cannot be identified, the NR-RAN device may trigger the implicit subscription mechanism. To be specific, after determining that the tracking area in which the terminal device is currently located can be sensed, the NR-RAN device immediately reports, to the core network device, the identifier of the tracking area in which the terminal device is currently located. Therefore, the AMF can obtain accurate ULI in time, so that an area-related operation in Table 1 can be performed.

Actions of the NR-RAN device in the foregoing steps S1701 to S1708 may be performed by the processor 601 in the communication device 600 shown in FIG. 6 by invoking the application program code stored in the memory 603 to instruct the NR-RAN device to perform the actions. Actions of the AMF in the foregoing steps S1701 to S1708 may be performed by the processor 601 in the communication device 600 shown in FIG. 6 by invoking the application program code stored in the memory 603 to instruct the AMF to perform the actions. Actions of the terminal device in the foregoing steps S1701 to S1708 may be performed by the processor 601 in the communication device 600 shown in FIG. 6 by invoking the application program code stored in the memory 603 to instruct the terminal device to perform the actions. This is not limited in this embodiment.

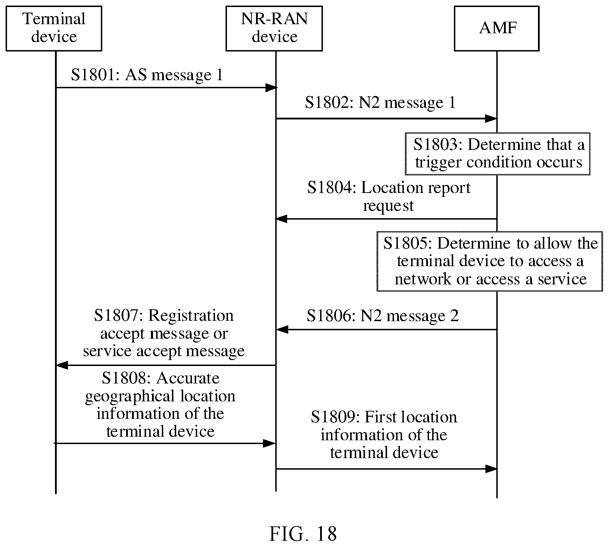

For example, based on the embodiments of FIG. 9 to FIG. 16, FIG. 18 shows another positioning method in the 5G mobile communication system according to an embodiment of this application. The method includes the following steps.

S1801: A terminal device sends an AN message (AS message) to an NR-RAN device. Correspondingly, the NR-RAN device receives the AN message from the terminal device.

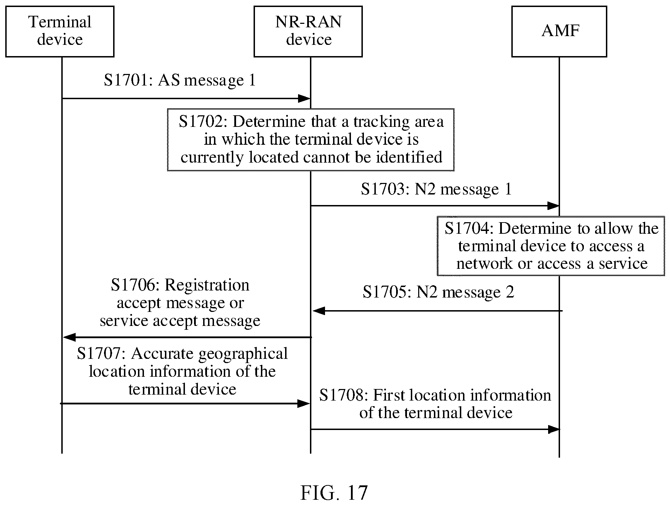

For a specific implementation of step S1801, refer to step S1701 in the embodiment of FIG. 17. Details are not described herein again.

S1802: The NR-RAN device sends an N2 message 1 (N2 message 1) to an AMF. Correspondingly, the AMF receives the N2 message 1 from the NR-RAN device.

For a specific implementation of step S1802, refer to step S1703 in the embodiment of FIG. 17. Details are not described herein again.

In a possible implementation, in the soft handover scenario shown in FIG. 7, after the NR-RAN device determines that a tracking area in which the terminal device is currently located cannot be identified, ULI in the N2 message 1 sent to the AMF includes a second TAI, and the second TAI is one of a plurality of TAIs included in location information of the terminal device that is currently obtained by the NR-RAN device.

S1803: The AMF determines that a trigger condition occurs.

For a specific implementation in which the AMF determines that the trigger condition occurs, refer to step S1001 in the embodiment of FIG. 10. Details are not described herein again.

It should be noted that the type indication information that indicates that the radio access technology type is the satellite and that is in step S1001 in the embodiment of FIG. 10 may be carried in the N2 message 1.

S1804: The AMF sends a location report request to the NR-RAN device. Correspondingly, the NR-RAN device receives the location report request from the AMF. The location report request is used to request a current location of the terminal device.

In a possible implementation, after receiving the location report request from the AMF, the NR-RAN device may further trigger subscription to the current location of the terminal device from the terminal device. For related descriptions, refer to the embodiment of FIG. 9. Details are not described herein again.

S1805 to S1809 are the same as steps S1704 to S1708 in the embodiment of FIG. 17. Details are not described herein again.

It should be noted that in this embodiment of this application, an example in which the location report request and an N2 message 2 are two independent messages is used for description. In a possible implementation, the location report request may alternatively be included in the N2 message 2. This is not specifically limited in this embodiment of this application.

In this case, the AMF may learn of accurate location information of the terminal device.

In a possible implementation, the positioning method provided in this embodiment of this application further includes: The AMF determines, based on a first TAI, that a TA in which the terminal device is currently located is in a forbidden area, and further sends, to the terminal device, a reject TAI or geographical location information corresponding to the reject TAI, so that the terminal device updates a locally maintained forbidden area list based on the reject TAI or the geographical location information corresponding to the reject TAI. For a related implementation, refer to the embodiments of FIG. 11, FIG. 12, and FIG. 14. Details are not described herein again.

According to the positioning method provided in this embodiment of this application, after determining that the trigger condition occurs, the AMF may directly subscribe to the location information of the terminal device from the NR-RAN device, so that after sensing the tracking area in which the terminal device is currently located, the NR-RAN device immediately reports, to a core network device, an identifier of the tracking area in which the terminal device is currently located. Therefore, the AMF can obtain accurate ULI in time, so that an area-related operation in Table 1 can be performed.

Actions of the NR-RAN device in the foregoing steps S1801 to S1809 may be performed by the processor 601 in the communication device 600 shown in FIG. 6 by invoking the application program code stored in the memory 603 to instruct the NR-RAN device to perform the actions. Actions of the AMF in the foregoing steps S1801 to S1809 may be performed by the processor 601 in the communication device 600 shown in FIG. 6 by invoking the application program code stored in the memory 603 to instruct the AMF to perform the actions. Actions of the terminal device in the foregoing steps S1801 to S1809 may be performed by the processor 601 in the communication device 600 shown in FIG. 6 by invoking the application program code stored in the memory 603 to instruct the terminal device to perform the actions. This is not limited in this embodiment.

For example, based on the embodiments of FIG. 9 to FIG. 16, FIG. 19 shows another positioning method in the 5G mobile communication system according to an embodiment of this application. The method includes the following steps.

S1901: A terminal device sends an AN message 1 (AS message 1) to an NR-RAN device. Correspondingly, the NR-RAN device receives the AN message 1 from the terminal device.

For details of step S1901, refer to step S1701 in the embodiment of FIG. 17. For example, a difference is as follows: In the embodiment of FIG. 17, the NAS message 1 includes the registration request or the service request. In this embodiment of this application, because accurate geographical location information of the terminal device needs to be reported subsequently in a mobility update procedure, and no mobility update exists in a service procedure, a NAS message 1 includes a registration request, and the registration request is used to request to initially access a network. For other related descriptions, refer to the embodiment of FIG. 17. Details are not described herein again.

S1902 is the same as step S1703 in the embodiment of FIG. 17. Details are not described herein again.

S1903 and S1904 are the same as steps S1704 and S1705 in the embodiment of FIG. 17. Details are not described herein again.

S1905: The NR-RAN device sends a registration accept message to the terminal device. Correspondingly, the terminal device receives the registration accept message from the NR-RAN device.

In this embodiment of this application, after receiving the registration accept message from the NR-RAN device, the terminal device may learn that AS security between the terminal device and the NR-RAN device is established.

In this embodiment of this application, after obtaining mobility restriction information 2, the terminal device may perform an area-related operation. For a specific implementation, refer to the embodiments of FIG. 13 and FIG. 15. Details are not described herein again.

When the terminal device determines to access the network through a satellite, or when the terminal device determines that a plurality of TAIs are received, or when the terminal device determines that second indication information is received, after the terminal device receives the registration accept message from a core network device, the terminal device triggers mobility update.

It may be understood that that the terminal device triggers mobility update may also be described as that the terminal device immediately initiates mobility update, to be specific, after receiving the registration accept message or the service accept message, the terminal device immediately initiates a mobility update procedure.

A possible implementation includes the following steps.

S1906: The terminal device sends an AN message 2 to the NR-RAN device. Correspondingly, the NR-RAN device receives the AN message 2 from the terminal device.

The AN message 2 includes an AN parameter 2 and a NAS message 2. The NAS message 2 includes a registration request. The registration request is used for mobility update, and the AN parameter 2 includes the accurate geographical location information of the terminal device.

S1907: The NR-RAN device sends an N2 message 3 to an AMF. Correspondingly, the AMF receives the N2 message 3 from the NR-RAN device.

The N2 message 3 includes ULI and an N1 SM container. The N1 SM container includes the NAS message 2 in step S1906. The ULI is first location information of the terminal device, the first location information includes a first TAI, and the first TAI is an identifier of a tracking area in which the terminal device is currently located.

In this case, the AMF may learn of the accurate location information of the terminal device.

In a possible implementation, the positioning method provided in this embodiment of this application further includes: The AMF determines, based on the first TAI, that a TA in which the terminal device is currently located is in a forbidden area, and further sends, to the terminal device, a reject TAI or geographical location information corresponding to the reject TAI, so that the terminal device updates a locally maintained forbidden area list based on the reject TAI or the geographical location information corresponding to the reject TAI. For a related implementation, refer to the embodiments of FIG. 11, FIG. 12, and FIG. 14. Details are not described herein again.

It should be noted that if the AMF determines, based on the first TAI, that the TA in which the terminal device is currently located is in the forbidden area, the reject TAI or the geographical location information corresponding to the reject TAI may be carried in a deregistration message sent by the AMF to the terminal device. Certainly, if the AMF determines, based on the first TAI, that the TA in which the terminal device is currently located is not in the forbidden area, the AMF may send the registration accept message to the terminal device. This is not specifically limited in this embodiment of this application.

According to the positioning method provided in this embodiment of this application, after receiving the message used for mobility update, the NG-RAN device may sense the tracking area in which the terminal device is currently located, and may further trigger reporting of the identifier of the tracking area in which the terminal device is currently located to the core network device. Therefore, the AMF can obtain accurate ULI in time, so that an area-related operation in Table 1 can be performed.

Actions of the NR-RAN device in the foregoing steps S1901 to S1907 may be performed by the processor 601 in the communication device 600 shown in FIG. 6 by invoking the application program code stored in the memory 603 to instruct the NR-RAN device to perform the actions. Actions of the AMF in the foregoing steps S1901 to S1907 may be performed by the processor 601 in the communication device 600 shown in FIG. 6 by invoking the application program code stored in the memory 603 to instruct the AMF to perform the actions. Actions of the terminal device in the foregoing steps S1901 to S1907 may be performed by the processor 601 in the communication device 600 shown in FIG. 6 by invoking the application program code stored in the memory 603 to instruct the terminal device to perform the actions. This is not limited in this embodiment.

It may be understood that in the embodiments of FIG. 9 to FIG. 19, the methods and/or the steps implemented by the access network device may alternatively be implemented by a component that may be used in the access network device, the methods and/or the steps implemented by the core network device may alternatively be implemented by a component (for example, a chip or a circuit) that may be used in the core network device, and the methods and/or the steps implemented by the terminal device may alternatively be implemented by a component (for example, a chip or a circuit) that may be used in the terminal device.

The foregoing mainly describes the solutions provided in embodiments of this application from a perspective of interaction between network elements. Correspondingly, embodiments of this application further provide a communication apparatus. The communication apparatus may be the access network device in the foregoing method embodiments, an apparatus including the access network device, or a component that may be used in the access network device. Alternatively, the communication apparatus may be the core network device in the foregoing method embodiments, an apparatus including the core network device, or a component that may be used in the core network device. Alternatively, the communication apparatus may be the terminal device in the foregoing method embodiments, an apparatus including the terminal device, or a component that may be used in the terminal device. It may be understood that, to implement the foregoing functions, the communication apparatus includes a corresponding hardware structure and/or software module for performing each function. A person skilled in the art should easily be aware that, in combination with units and algorithm steps of the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

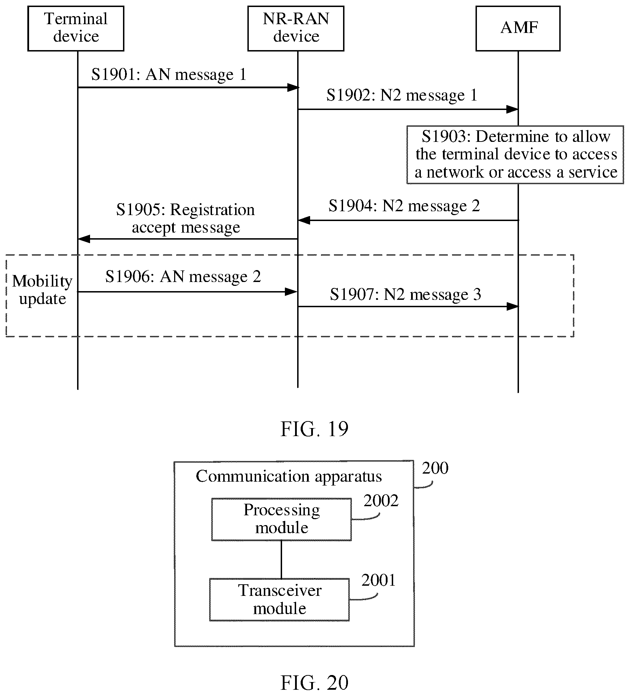

FIG. 20 is a schematic diagram of a structure of a communication apparatus 200. The communication apparatus 200 includes a processing module 2002 and a transceiver module 2001. The transceiver module 2001 may also be referred to as a transceiver unit, and is configured to implement receiving and sending functions. For example, the transceiver module may be a transceiver circuit, a transceiver machine, a transceiver, or a communication interface.

For example, the communication apparatus 200 is the access network device in the foregoing method embodiments, or a chip or another component disposed in the access network device.

The processing module 2002 is configured to determine that a trigger condition occurs. The transceiver module 2001 is configured to send first location information of a terminal device to a core network device, where the first location information includes a first TAI, and the first TAI is an identifier of a tracking area in which the terminal device is currently located.

In a possible implementation, the processing module 2002 is specifically configured to: after determining that the tracking area in which the terminal device is currently located cannot be identified, determine the tracking area in which the terminal device is currently located; or after receiving a first message from the core network device through the transceiver module 2001, determine the tracking area in which the terminal device is currently located, where the first message is used to request a current location of the terminal device; or after receiving a second message from the terminal device through the transceiver module 2001, determine the tracking area in which the terminal device is currently located, where the second message is used to request mobility update.

In a possible implementation, that the processing module 2002 determines that the tracking area in which the terminal device is currently located cannot be identified includes: The processing module 2002 determines that currently obtained location information of the terminal device includes a plurality of TAIs. Alternatively, the processing module 2002 determines that currently obtained location information of the terminal device includes one TAI, but a location corresponding to the TAI included in the location information of the terminal device may be inconsistent with the current location of the terminal device.

In a possible implementation, the transceiver module 2001 is further configured to send a third message to the core network device, where the third message includes second location information of the terminal device and first indication information, the second location information includes a second TAI, and the first indication information indicates that the second location information of the terminal device is inaccurate.

In another possible implementation, the transceiver module 2001 is further configured to send a fourth message to the core network device, where the fourth message includes third location information of the terminal device, and the third location information includes a plurality of TAIs.

For example, the communication apparatus 200 is the core network device in the foregoing method embodiments, or a chip or another component disposed in the core network device.

The processing module 2002 is configured to determine that a trigger condition occurs. The transceiver module 2001 is configured to send a first message to an access network device, where the first message is used to request a current location of a terminal device. The transceiver module 2001 is further configured to receive first location information of the terminal device from the access network device, where the first location information includes a first TAI, and the first TAI is an identifier of a tracking area in which the terminal device is currently located.

In a possible implementation, the processing module 2002 is specifically configured to: determine that received location information of the terminal device includes a plurality of TAIs; or determine that first indication information is received, where the first indication information indicates that location information of the terminal device that is received by the core network device is inaccurate.

In a possible implementation, the processing module 2002 is further configured to determine, based on the first location information of the terminal device, that the terminal device is located in a forbidden area. The transceiver module 2001 is further configured to send a reject TAI to the terminal device. Alternatively, the transceiver module 2001 is further configured to send geographical location information corresponding to a reject TAI to the terminal device.

In a possible implementation, the transceiver module 2001 is further configured to send service area restriction information in a geographical location form and/or local area data network service area information in a geographical location form to the terminal device.

For example, the communication apparatus 200 is the terminal device in the foregoing method embodiments, or a chip or another component disposed in the terminal device. In a possible implementation:
The transceiver module 2001 is configured to receive a reject TAI from a core network device. The processing module 2002 is configured to: after determining, based on a locally maintained mapping relationship between a TAI and geographical location information, geographical location information corresponding to the reject TAI, add the geographical location information corresponding to the reject TAI to a locally maintained forbidden area list.

In a possible implementation, the processing module 2002 is further configured to determine, based on information about a current geographical location of the terminal device and the forbidden area list, whether to initiate a signaling procedure.

In a possible implementation, that the processing module 2002 is configured to determine, based on information about a current geographical location of the terminal device and the forbidden area list, whether to initiate a signaling procedure includes: The processing module 2002 is configured to: when the information about the current geographical location of the terminal device is in the forbidden area list, determine that initiation of the signaling procedure is not allowed, or determine that initiation of the signaling procedure is allowed again after the terminal device moves for preset time and/or a preset distance.

In a possible implementation, the transceiver module 2001 is further configured to receive service area restriction information in a TAI form from the core network device. The processing module 2002 is further configured to: after determining, based on the locally maintained mapping relationship between a TAI and geographical location information, a TAI corresponding to the information about the current geographical location of the terminal device, determine, based on the TAI corresponding to the information about the current geographical location of the terminal device and the service area restriction information, whether to initiate a service-related request.

In a possible implementation, that the processing module 2002 is configured to determine, based on the TAI corresponding to the information about the current geographical location of the terminal device and the service area restriction information, whether to initiate a service-related request includes: The processing module 2002 is configured to: when the service area restriction information includes service allowed area information, if the TAI corresponding to the information about the current geographical location of the terminal device is not in the service area restriction information, determine that initiation of the service-related request is not allowed, or determine that initiation of the service-related request is allowed again after the terminal device moves for preset time and/or a preset distance.

In another possible implementation, that the processing module 2002 is configured to determine, based on the TAI corresponding to the information about the current geographical location of the terminal device and the service area restriction information, whether to initiate a service-related request includes: The processing module 2002 is configured to: when the service area restriction information includes service non-allowed area information, if the TAI corresponding to the information about the current geographical location of the terminal device is in the service area restriction information, determine that initiation of the service-related request is not allowed, or determine that initiation of the service-related request is allowed again after the terminal device moves for preset time and/or a preset distance.

For example, the communication apparatus 200 is the terminal device in the foregoing method embodiments, or a chip or another component disposed in the terminal device. In a possible implementation:
The transceiver module 2001 is configured to receive a reject TAI from a core network device. The processing module 2002 is configured to add the reject TAI to a locally maintained forbidden area list. The processing module 2002 is further configured to: after obtaining information about a current geographical location of the terminal device, determine, based on a locally maintained mapping relationship between a TAI and geographical location information, a TAI corresponding to the information about the current geographical location of the terminal device. The processing module 2002 is further configured to determine, based on the TAI corresponding to the information about the current geographical location of the terminal device and the forbidden area list, whether to initiate a signaling procedure.

In a possible implementation, that the processing module 2002 is configured to determine, based on the TAI corresponding to the information about the current geographical location of the terminal device and the forbidden area list, whether to initiate a signaling procedure includes: The processing module 2002 is configured to: when the TAI corresponding to the information about the current geographical location of the terminal device is in the forbidden area list, determine that initiation of the signaling procedure is not allowed, or determine that initiation of the signaling procedure is allowed again after the terminal device moves for preset time and/or a preset distance.

In a possible implementation, the transceiver module 2001 is further configured to receive service area restriction information in a TAI form from the core network device. The processing module 2002 is further configured to: after determining, based on the locally maintained mapping relationship between a TAI and geographical location information, the TAI corresponding to the information about the current geographical location of the terminal device, determine, based on the TAI corresponding to the information about the current geographical location of the terminal device and the service area restriction information, whether to initiate a service-related request.

In a possible implementation, that the processing module 2002 is configured to determine, based on the TAI corresponding to the information about the current geographical location of the terminal device and the service area restriction information, whether to initiate a service-related request includes: The processing module 2002 is configured to: when the service area restriction information includes service allowed area information, if the TAI corresponding to the information about the current geographical location of the terminal device is not in the service area restriction information, determine that initiation of the service-related request is not allowed, or determine that initiation of the service-related request is allowed again after the terminal device moves for preset time and/or a preset distance.

In another possible implementation, that the processing module 2002 is configured to determine, based on the TAI corresponding to the information about the current geographical location of the terminal device and the service area restriction information, whether to initiate a service-related request includes: The processing module 2002 is configured to: when the service area restriction information includes service non-allowed area information, if the TAI corresponding to the information about the current geographical location of the terminal device is in the service area restriction information, determine that initiation of the service-related request is not allowed, or determine that initiation of the service-related request is allowed again after the terminal device moves for preset time and/or a preset distance.

For example, the communication apparatus 200 is the terminal device in the foregoing method embodiments, or a chip or another component disposed in the terminal device. In a possible implementation:
The transceiver module 2001 is configured to receive geographical location information that corresponds to a reject TAI and that is from a core network device. The processing module 2002 is configured to add the geographical location information corresponding to the reject TAI to a locally maintained forbidden area list.

In a possible implementation, the processing module 2002 is further configured to determine, based on information about a current geographical location of the terminal device and the forbidden area list, whether to initiate a signaling procedure.

In a possible implementation, that the processing module 2002 is configured to determine, based on information about a current geographical location of the terminal device and the forbidden area list, whether to initiate a signaling procedure includes: The processing module 2002 is configured to: when the information about the current geographical location of the terminal device is in the forbidden area list, determine that initiation of the signaling procedure is not allowed, or determine that initiation of the signaling procedure is allowed again after the terminal device moves for preset time and/or a preset distance.

In a possible implementation, the transceiver module 2001 is further configured to receive service area restriction information in a geographical location form from the core network device. The processing module 2002 is further configured to determine, based on the information about the current geographical location of the terminal device and the service area restriction information, whether to initiate a service-related request.

In a possible implementation, that the processing module 2002 is configured to determine, based on the information about the current geographical location of the terminal device and the service area restriction information, whether to initiate a service-related request includes: The processing module 2002 is configured to: when the service area restriction information includes service allowed area information, if the information about the current geographical location of the terminal device is not in the service area restriction information, determine that initiation of the service-related request is not allowed, or determine that initiation of the service-related request is allowed again after the terminal device moves for preset time and/or a preset distance.

In a possible implementation, that the processing module 2002 is configured to determine, based on the information about the current geographical location of the terminal device and the service area restriction information, whether to initiate a service-related request includes: The processing module 2002 is configured to: when the service area restriction information includes service non-allowed area information, if the information about the current geographical location of the terminal device is in the service area restriction information, determine that initiation of the service-related request is not allowed, or determine that initiation of the service-related request is allowed again after the terminal device moves for preset time and/or a preset distance.

For example, the communication apparatus 200 is the terminal device in the foregoing method embodiments, or a chip or another component disposed in the terminal device. In a possible implementation:
The transceiver module 2001 is configured to receive service area restriction information in a geographical location form from a core network device. The processing module 2002 is configured to determine, based on information about a current geographical location of the terminal device and the service area restriction information, whether to initiate a service-related request.

In a possible implementation, that the processing module 2002 is configured to determine, based on information about a current geographical location of the terminal device and the service area restriction information, whether to initiate a service-related request includes: The processing module 2002 is configured to: when the service area restriction information includes service allowed area information, if the information about the current geographical location of the terminal device is not in the service area restriction information, determine that initiation of the service-related request is not allowed, or determine that initiation of the service-related request is allowed again after the terminal device moves for preset time and/or a preset distance.

In a possible implementation, that the processing module 2002 is configured to determine, based on information about a current geographical location of the terminal device and the service area restriction information, whether to initiate a service-related request includes: The processing module 2002 is configured to: when the service area restriction information includes service non-allowed area information, if the information about the current geographical location of the terminal device is in the service area restriction information, determine that initiation of the service-related request is not allowed, or determine that initiation of the service-related request is allowed again after the terminal device moves for preset time and/or a preset distance.

For example, the communication apparatus 200 is the terminal device in the foregoing method embodiments, or a chip or another component disposed in the terminal device. In a possible implementation:
The transceiver module 2001 is configured to send a fifth message to a core network device, where the fifth message is used by the terminal device to request to initially access a network or access a service. The processing module 2002 is configured to: when the terminal device determines to access the network through a satellite, or when the terminal device determines that a plurality of TACs are received, or when the terminal device determines that second indication information is received, after the terminal device receives a sixth message from the core network device, trigger mobility update, where the second indication information indicates that a TAC included in a satellite broadcast message is inaccurate, and the sixth message indicates that the terminal device is allowed to access the network or access the service.

All related content of the steps in the foregoing method embodiments may be cited in function descriptions of the corresponding functional modules. Details are not described herein again.

In this embodiment, the communication apparatus 200 is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the communication apparatus 200 may be in a form of the communication apparatus 600 shown in FIG. 6.

For example, the processor 601 in the communication apparatus 600 shown in FIG. 6 may invoke the computer-executable instructions stored in the memory 603, so that the communication apparatus 600 performs the positioning method in the foregoing method embodiments.

Specifically, functions/implementation processes of the transceiver module 2001 and the processing module 2002 in FIG. 20 may be implemented by the processor 601 in the communication apparatus 600 shown in FIG. 6 by invoking the computer-executable instructions stored in the memory 603. Alternatively, a function/an implementation process of the processing module 2002 in FIG. 20 may be implemented by the processor 601 in the communication apparatus 600 shown in FIG. 6 by invoking the computer-executable instructions stored in the memory 603, and a function/an implementation process of the transceiver module 2001 in FIG. 20 may be implemented by the communication interface 604 in the communication apparatus 600 shown in FIG. 6.

The communication apparatus 200 provided in this embodiment may perform the foregoing positioning methods. Therefore, for technical effects that can be achieved by the communication apparatus, refer to the foregoing method embodiments. Details are not described herein again.

It should be noted that one or more of the foregoing modules or units may be implemented by using software, hardware, or a combination thereof. When any one of the foregoing modules or units is implemented by using software, the software exists in a form of computer program instructions, and is stored in the memory. The processor may be configured to execute the program instructions and implement the foregoing method procedure. The processor may be built into a SoC (system on chip) or an ASIC, or may be an independent semiconductor chip. In addition to a core configured to perform calculation or processing by executing a software instruction, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

In a possible implementation, an embodiment of this application further provides a communication apparatus (where for example, the communication apparatus may be a chip or a chip system). The communication apparatus includes a processor, configured to implement the method in any one of the foregoing method embodiments. In a possible implementation, the communication apparatus further includes a memory. The memory is configured to store necessary program instructions and necessary data. The processor may invoke program code stored in the memory, to indicate the communication apparatus to perform the method in any one of the foregoing method embodiments. Certainly, the memory may not in the communication apparatus. When the communication apparatus is a chip system, the communication apparatus may include a chip, or may include a chip and another discrete component. This is not specifically limited in this embodiment of this application.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. Clearly, a person skilled in the art can make various modifications and variations to this application without departing from the spirit and scope of this application. This application is intended to cover these modifications and variations of this application provided that they fall within the scope of protection defined by the claims of this application and their equivalent technologies.

## Claims

1. A positioning method, wherein the method comprises:
determining, by an access network device, that currently obtained location information of a terminal device comprises a plurality of tracking area identities TAIs;
obtaining, by the access network device, accurate geographical location information of the terminal device;
determining, by the access network device based on the accurate geographical location information of the terminal device, a tracking area in which the terminal device is currently located; and
sending, by the access network device, first location information of the terminal device to a core network device, wherein the first location information comprises a first TAI, and the first TAI is an identifier of the tracking area in which the terminal device is currently located.

2. The method according to claim 1, wherein the obtaining, by the access network device, accurate geographical location information of the terminal device comprises:
after access stratum security between the terminal device and the access network device is established, receiving, by the access network device, the accurate geographical location information from the terminal device.

3. The method according to claim 1 or 2, wherein the method further comprises: receiving, by the access network device, a first message from the core network device, wherein the first message is used to request a current location of the terminal device.

4. A positioning method, wherein the method comprises:
when a core network device determines that a terminal device accesses a network through a satellite, sending, by the core network device, a first message to an access network device, wherein the first message is used to request a current location of the terminal device; and
receiving, by the core network device, first location information of the terminal device from the access network device, wherein the first location information comprises a first tracking area identity TAI, and the first TAI is an identifier of a tracking area in which the terminal device is currently located.

5. The method according to claim 4, wherein that a core network device determines that a terminal device accesses a network through a satellite comprises:
the core network device receives indication information indicating that the terminal device accesses the network or accesses a service through the satellite.

6. The method according to claim 4 or 5, wherein the method further comprises:
determining, by the core network device based on the first location information of the terminal device, that the terminal device is located in a forbidden area; and
sending, by the core network device, a reject TAI to the terminal device; or sending, by the core network device, geographical location information corresponding to a reject TAI to the terminal device.

7. The method according to any one of claims 4 to 6, wherein the method further comprises:
sending, by the core network device, service area restriction information in a geographical location form and/or local area data network service area information in a geographical location form to the terminal device.

8. A positioning method, wherein the method comprises:
receiving, by a terminal device, a reject tracking area identity TAI from a core network device;
determining, by the terminal device based on a locally maintained mapping relationship between a TAI and geographical location information, geographical location information corresponding to the reject TAI; and
adding, by the terminal device, the geographical location information corresponding to the reject TAI to a locally maintained forbidden area list.

9. The method according to claim 8, wherein the method further comprises:
determining, by the terminal device based on information about a current geographical location of the terminal device and the forbidden area list, whether to initiate a signaling procedure.

10. The method according to claim 9, wherein the determining, by the terminal device based on information about a current geographical location of the terminal device and the forbidden area list, whether to initiate a signaling procedure comprises:
when the information about the current geographical location of the terminal device is in the forbidden area list, determining, by the terminal device, that initiation of the signaling procedure is not allowed; or determining, by the terminal device, that initiation of the signaling procedure is allowed again after the terminal device moves for preset time and/or a preset distance.

11. The method according to any one of claims 8 to 10, wherein the method further comprises:
receiving, by the terminal device, service area restriction information in a TAI form from the core network device;
determining, by the terminal device based on the locally maintained mapping relationship between a TAI and geographical location information, a TAI corresponding to the information about the current geographical location of the terminal device; and
determining, by the terminal device based on the TAI corresponding to the information about the current geographical location of the terminal device and the service area restriction information, whether to initiate a service-related request.

12. The method according to claim 11, wherein the determining, by the terminal device based on the TAI corresponding to the information about the current geographical location of the terminal device and the service area restriction information, whether to initiate a service-related request comprises:
when the service area restriction information comprises service allowed area information, if the TAI corresponding to the information about the current geographical location of the terminal device is not in the service area restriction information, determining, by the terminal device, that initiation of the service-related request is not allowed; or determining, by the terminal device, that initiation of the service-related request is allowed again after the terminal device moves for preset time and/or a preset distance; or
when the service area restriction information comprises service non-allowed area information, if the TAI corresponding to the information about the current geographical location of the terminal device is in the service area restriction information, determining, by the terminal device, that initiation of the service-related request is not allowed; or determining, by the terminal device, that initiation of the service-related request is allowed again after the terminal device moves for preset time and/or a preset distance.

13. A positioning method, wherein the method comprises:
receiving, by a terminal device, a reject tracking area identity TAI from a core network device;
adding, by the terminal device, the reject TAI to a locally maintained forbidden area list;
after the terminal device obtains information about a current geographical location of the terminal device, determining, by the terminal device based on a locally maintained mapping relationship between a TAI and geographical location information, a TAI corresponding to the information about the current geographical location of the terminal device; and
determining, by the terminal device based on the TAI corresponding to the information about the current geographical location of the terminal device and the forbidden area list, whether to initiate a signaling procedure.

14. The method according to claim 13, wherein the determining, by the terminal device based on the TAI corresponding to the information about the current geographical location of the terminal device and the forbidden area list, whether to initiate a signaling procedure comprises:
when the TAI corresponding to the information about the current geographical location of the terminal device is in the forbidden area list, determining, by the terminal device, that initiation of the signaling procedure is not allowed; or determining, by the terminal device, that initiation of the signaling procedure is allowed again after the terminal device moves for preset time and/or a preset distance.

15. The method according to claim 13 or 14, wherein the method further comprises:
receiving, by the terminal device, service area restriction information in a TAI form from the core network device;
determining, by the terminal device based on the locally maintained mapping relationship between a TAI and geographical location information, the TAI corresponding to the information about the current geographical location of the terminal device; and
determining, by the terminal device based on the TAI corresponding to the information about the current geographical location of the terminal device and the service area restriction information, whether to initiate a service-related request.

16. The method according to claim 15, wherein the determining, by the terminal device based on the TAI corresponding to the information about the current geographical location of the terminal device and the service area restriction information, whether to initiate a service-related request comprises:
when the service area restriction information comprises service allowed area information, if the TAI corresponding to the information about the current geographical location of the terminal device is not in the service area restriction information, determining, by the terminal device, that initiation of the service-related request is not allowed; or determining, by the terminal device, that initiation of the service-related request is allowed again after the terminal device moves for preset time and/or a preset distance; or
when the service area restriction information comprises service non-allowed area information, if the TAI corresponding to the information about the current geographical location of the terminal device is in the service area restriction information, determining, by the terminal device, that initiation of the service-related request is not allowed; or determining, by the terminal device, that initiation of the service-related request is allowed again after the terminal device moves for preset time and/or a preset distance.

17. A positioning method, wherein the method comprises:
determining, by an access network device, that currently obtained location information of a terminal device comprises a plurality of tracking area identities TAIs;
obtaining, by the access network device, accurate geographical location information of the terminal device;
determining, by the access network device based on the accurate geographical location information of the terminal device, a tracking area in which the terminal device is currently located;
sending, by the access network device, first location information of the terminal device to a core network device, wherein the first location information comprises a first TAI, and the first TAI is an identifier of the tracking area in which the terminal device is currently located; and
receiving, by the core network device, the first location information from the access network device.

18. The method according to claim 17, wherein the obtaining, by the access network device, accurate geographical location information of the terminal device comprises:
after access stratum security between the terminal device and the access network device is established, receiving, by the access network device, the accurate geographical location information from the terminal device.

19. The method according to claim 17 or 18, wherein the method further comprises:
sending, by the core network device, a first message to the access network device, and receiving, by the access network device, the first message from the core network device, wherein the first message is used to request a current location of the terminal device.

20. A communication system, wherein the communication system comprises an access network device and a core network device;
the access network device is configured to: determine that currently obtained location information of a terminal device comprises a plurality of tracking area identities TAIs; obtain accurate geographical location information of the terminal device; determine, based on the accurate geographical location information of the terminal device, a tracking area in which the terminal device is currently located; and send first location information of the terminal device to the core network device, wherein the first location information comprises a first TAI, and the first TAI is an identifier of the tracking area in which the terminal device is currently located; and
the core network device is configured to receive the first location information from the access network device.

21. The communication system according to claim 20, wherein that the access network device is configured to obtain the accurate geographical location information of the terminal device comprises: after access stratum security between the terminal device and the access network device is established, the accurate geographical location information is received from the terminal device.

22. The communication system according to claim 20 or 21, wherein
the core network device is further configured to: send a first message to the access network device, wherein the first message is used to request a current location of the terminal device; and receive the first message from the core network device.

23. A positioning method, wherein the method comprises:
when a core network device determines that a terminal device accesses a network through a satellite, sending, by the core network device, a first message to an access network device, wherein the first message is used to request a current location of the terminal device;
receiving, by the access network device, the first message from the core network device;
sending, by the access network device, first location information of the terminal device to the core network device, wherein the first location information comprises a first tracking area identity TAI, and the first TAI is an identifier of a tracking area in which the terminal device is currently located; and
receiving, by the core network device, the first location information of the terminal device from the access network device.

24. The method according to claim 23, wherein that a core network device determines that a terminal device accesses a network through a satellite comprises:
the core network device receives indication information indicating that the terminal device accesses the network or accesses a service through the satellite.

25. The method according to claim 23 or 24, wherein the method further comprises:
determining, by the core network device based on the first location information of the terminal device, that the terminal device is located in a forbidden area; and
sending, by the core network device, a reject TAI to the terminal device; or sending, by the core network device, geographical location information corresponding to a reject TAI to the terminal device.

26. The method according to any one of claims 23 to 25, wherein the method further comprises:
sending, by the core network device, service area restriction information in a geographical location form and/or local area data network service area information in a geographical location form to the terminal device.

27. A communication system, wherein the communication system comprises an access network device and a core network device;
the core network device is configured to: when determining that a terminal device accesses a network through a satellite, send a first message to the access network device, wherein the first message is used to request a current location of the terminal device;
the access network device is configured to: receive the first message from the core network device; and send first location information of the terminal device to the core network device, wherein the first location information comprises a first tracking area identity TAI, and the first TAI is an identifier of a tracking area in which the terminal device is currently located; and
the core network device is further configured to receive the first location information of the terminal device from the access network device.

28. The communication system according to claim 27, wherein that the core network device is configured to determine that the terminal device accesses the network through the satellite comprises:
the core network device is configured to receive indication information indicating that the terminal device accesses the network or accesses a service through the satellite.

29. The communication system according to claim 27 or 28, wherein
the core network device is further configured to: determine, based on the first location information of the terminal device, that the terminal device is located in a forbidden area; and send a reject TAI to the terminal device; or send geographical location information corresponding to a reject TAI to the terminal device.

30. The communication system according to any one of claims 27 to 29, wherein
the core network device is further configured to send service area restriction information in a geographical location form and/or local area data network service area information in a geographical location form to the terminal device.

31. A communication apparatus, comprising a processor, wherein
the processor is configured to read a program from a memory and run the program to implement the method according to any one of claims 1 to 3, the method according to any one of claims 4 to 7, the method according to any one of claims 8 to 12, or the method according to any one of claims 13 to 16.

32. A computer program product comprising instructions, wherein when the computer program product runs on a computer, the computer is enabled to perform the method according to any one of claims 1 to 3, the method according to any one of claims 4 to 7, the method according to any one of claims 8 to 12, or the method according to any one of claims 13 to 16.

33. A computer-readable storage medium, wherein the computer-readable storage medium stores instructions; and when the instructions are run on a computer, a processor is enabled to perform the method according to any one of claims 1 to 3, the method according to any one of claims 4 to 7, the method according to any one of claims 8 to 12, or the method according to any one of claims 13 to 16.
